Europäisches Patentamt

European Patent Office

Office européen des brevets

(19)

(11) **EP 1 151 360 B1**

(12) **FASCICULE DE BREVET EUROPEEN**

(45) Date de publication et mention
de la délivrance du brevet:
**21.05.2003 Bulletin 2003/21**

(21) Numéro de dépôt: **00905115.2**

(22) Date de dépôt: **11.02.2000**

(51) Int Cl.⁷: **G05D 1/02**

(86) Numéro de dépôt international:
**PCT/FR00/00344**

(87) Numéro de publication internationale:
**WO 00/048048 (17.08.2000 Gazette 2000/33)**

(54) **PROCEDE DE REALISATION UTILISANT UN SYSTEME DE POSITIONNEMENT GLOBAL**

VERFAHREN ZUR HERSTELLUNG MIT HILFE EINES
SATELLITENPOSITIONIERUNGSSYSTEMS

OPERATING METHOD USING GLOBAL POSITIONING SYSTEM

(84) Etats contractants désignés:
**AT BE CH CY DE DK ES FI FR GB GR IE IT LI LU
MC NL PT SE**

(30) Priorité: **12.02.1999 FR 9901737**

(43) Date de publication de la demande:
**07.11.2001 Bulletin 2001/45**

(73) Titulaire: **GTM Construction S.A.
92000 Nanterre (FR)**

(72) Inventeur: **HINTZY, Ga[tan
F-75012 Paris (FR)**

(74) Mandataire: **Derambure, Christian
Bouju Derambure Bugnion,
52, rue de Monceau
75008 Paris (FR)**

(56) Documents cités:
**EP-A- 0 821 296            WO-A-98/09207
US-A- 5 631 658            US-A- 5 838 562**

## Description

L'invention concerne un procédé de réalisation d'une forme utile selon un modèle théorique, sur un ou à partir d'un corps délimité par une enveloppe tridimensionnelle telle que terrain, construction ou analogues, et utilisant un système de positionnement global par satellite tel que GPS ou analogue.

L'invention concerne également un dispositif de commande et d'asservissement mettant en oeuvre le procédé.

L'invention concerne aussi un engin destiné à la réalisation d'une telle forme utile, comme par exemple au moins une partie de nappe, de plateau ou de volume, d'édifice de travaux publics, bâtiment ou installation industrielle.

A titre d'exemple, évoquons maintenant une application de l'invention pour la réalisation de projets linéaires routiers, ferroviaires, aéroportuaires, ou de projets non linéaires tels que des plates-formes industrielles.

Dans de telles réalisations, l'invention vise les opérations de terrassement, de répandage, de grignotage, de coulée de béton notamment.

Pour ces réalisations ou opérations, il est fréquemment nécessaire d'obtenir avec une précision élevée, au moins une surface au minimum réglée, éventuellement complexe.

Evidemment, des impératifs similaires sont à respecter pour la réalisation de séparateurs en béton de voies routières coulés in situ, de bordures de trottoirs, de caniveaux ou de chaussées, ainsi que pour l'ensouillage de canalisations, par exemple pétrolières.

A cette fin, dans l'exemple évoqué plus haut, un ou plusieurs engins de chantier sont pilotés et/ou guidés pour mettre sous une forme utile des matériaux tels que remblai, béton, bitumineux ou analogues.

Le but est de réaliser une nappe avec au moins une surface, définie par le déplacement le long d'une courbe directrice, d'une autre courbe transversale en général polygonale, éventuellement variable.

On appelle profil topographique une telle surface. Un tel profil doit être le plus proche possible d'un profil théorique projeté dit modèle.

Ce modèle, par exemple défini à l'aide de logiciels de construction assistée par ordinateur, représente la nappe à réaliser.

Dans la pratique, ces nappes présentent des défauts ou imperfections par rapport au modèle, qu'il est nécessaire de relever afin de s'assurer que cette nappe répond aux exigences requises.

Ainsi, pour évaluer la qualité d'uni de projets routiers, un système de notation a été mis en place.

Ces défauts sont détectés par mesure physique in situ et quantifiés à partir d'une analyse numérique des dénivellations le long du profil de la chaussée, par des appareils de mesure physique.

L'amplitude de ces défauts est comprise entre quelques millimètres pour les plus petits, et quelques dizaines de millimètres pour les plus grands.

En fonction de l'amplitude mesurée, on attribue à la nappe une note dite note APL (Analyse de Profil en Long) comprise entre 0 et 10.

On attribue alors à une nappe dont les défauts ont une amplitude de quelques dizaines de millimètres, la note 0. Pour les défauts dont l'amplitude ne dépasse pas quelques millimètres, on attribue à la nappe la note 10.

Pour réaliser en pratique de telles nappes, trois techniques sont couramment employées.

Une technique consiste à guider au moins un engin de chantier suivant des fils installés sur site. Ces fils matérialisent la courbe directrice que doit parcourir l'engin.

Dans la pratique, le guidage par fils ne permet pas de réaliser des nappes présentant une ou des surfaces complexes aussi aisément et rapidement que des nappes simples.

En effet, seules deux dimensions de l'espace sont appréhendées, et la notation des nappes routières ainsi obtenues ne dépasse pas en général 6.

Une autre technique consiste à guider les engins de chantier suivant des faisceaux laser, qui matérialisent la courbe directrice, formée par une ou plusieurs sections droites, que les engins doivent parcourir pour réaliser la nappe.

Les positionnements successifs de l'engin sont obtenus à partir de sa position initiale, en considérant qu'il suit la courbe directrice, en mesurant la distance parcourue depuis l'origine, en calculant grâce au laser une position réelle de l'engin par rapport à la courbe, et en tentant de faire coïncider cette position avec la courbe souhaitée.

Lors de la réalisation de nappes présentant une ou des surfaces complexes, ce guidage nécessite un repositionnement fréquent des lasers.

En outre, du fait de la nature optique du laser, il est impératif d'éviter l'interposition d'obstacles matériels entre une source optique et son récepteur. Or, il est fréquent que de tels obstacles, comme d'autres engins sur le chantier (compacteuse, bouteur, camions, niveleuses ou analogues) coupent le faisceau laser, nécessitant l'interruption de l'opération ou réalisation guidée par le laser.

Par ailleurs, les variations géométriques au sein de certaines nappes compliquent, voire empêchent l'utilisation du guidage laser : on peut citer par exemple les bretelles d'échangeurs.

Enfin, l'utilisation du laser est complexe voire impossible pour les nappes dont la courbe directrice présente de faibles rayons de courbure, comme dans les bretelles d'échangeur routier.

Encore une autre technique connue consiste à utiliser des systèmes GPS.

Citons ainsi le document US-A-5.631.658 qui décrit un procédé de guidage d'engins, de terrassement par exemple, au moyen d'un système GPS.

Ce document prévoit de mémoriser un premier modèle tridimensionnel représentant la géographie désirée d'un site, et un second modèle tridimensionnel représentant la géographie réelle de ce site au fur et à mesure de sa réalisation.

Les deux modèles sont comparés par des moyens qui représentent, en signaux numériques et en temps réel, la position instantanée tridimensionnelle de la machine pendant qu'elle parcourt le site.

D'autres moyens déterminent et mettent à jour la différence entre les deux modèles géographiques, en temps réel.

Tandis que des moyens pilotent l'engin, en fonction de cette différence.

Un inconvénient de ce procédé est qu'il nécessite des moyens informatiques de mémorisation et de traitement capables de prendre en considération les deux modèles tridimensionnels, ce qui s'avère lourd à exploiter en pratique.

De plus, dans les nappes comportant plusieurs surfaces juxtaposées, il est difficile d'obtenir en pratique des liaisons précises entre ces surfaces, avec les guidages par GPS connus.

Egalement, les guidages GPS connus ne permettent pas de travailler indifféremment dans un sens ou dans l'autre suivant la courbe directrice, ce qui impose une certaine rigidité dans la méthode de travail.

L'invention vise donc à permettre la réalisation de nappes en s'affranchissant des inconvénients évoqués plus haut, entre autres.

Un but de l'invention est ainsi de permettre la réalisation de nappes pour projets routiers, dont la notation APL soit supérieure à 8, de préférence égale à 10, et avec une précision en élévation de $\pm$ 13 mm.

A cet effet, un premier objet de l'invention est un procédé de réalisation d'une nappe de projet routier ayant un profil topographique prédéterminé, à partir d'un corps existant délimité par une enveloppe tridimensionnelle, tel que terrain ou construction, à l'aide d'un outil monté sur un engin, par exemple de terrassement pour chantier ou analogues.

Cet engin coopère avec un système de positionnement global par satellite de type bi - fréquence, différentiel, cinématique et en temps réel tel que GPS ; et possède au moins un récepteur de positionnement global, par exemple sur son outil, afin d'être déplacé selon un modèle théorique de la nappe.

Selon une caractéristique, ce procédé comporte les étapes prévoyant de :

- mémoriser des courbes géométriques fixées propres à la nappe, dont au moins une courbe directrice sensiblement longitudinale et au moins un profil en travers ;
- mesurer au moins à un instant, la position en élévation, longitudinale et transversale de l'outil, à l'aide du récepteur de positionnement global lors du déplacement de l'outil, par exemple suivant une fréquence prédéterminée ;
- associer à cette position mesurée un emplacement le long de la courbe directrice ;
- calculer localement le modèle théorique en faisant correspondre à cet emplacement un profil en travers de la nappe;
- activer en mémoire un écart type significatif d'une incertitude caractéristique du système de positionnement global, éventuellement après sa détermination lors d'une phase d'étalonnage du récepteur ;
- comparer lors du déplacement de l'outil par exemple suivant une fréquence prédéterminée, une position d'élévation mesurée de l'outil avec une altitude théorique définie à partir du modèle ;
- déduire de cette comparaison un écart d'élévation à l'instant de la mesure, tel que cet écart est dit écart nul lorsque la position d'élévation mesurée est sensiblement confondue avec l'altitude théorique ;
- définir d'une part au moins de l'écart nul au moins deux bandes d'analyse, et par exemple deux bandes centrales respectivement supérieure et inférieure, deux bandes médianes respectivement supérieure et inférieure, et deux bandes extérieures respectivement supérieure et inférieure, ces bandes étant par exemple symétriques deux à deux, des bornes inférieures et/ou supérieures de ces bandes d'analyse étant proportionnelles à l'écart type ;
- identifier une bande d'analyse active à laquelle appartient cet écart d'élévation ;
- calculer en fonction de l'écart et de la bande d'analyse active, une consigne d'asservissement d'élévation, dont la valeur est plafonnée en fonction de la bande d'analyse active identifiée ; et
- commander la position d'élévation de l'outil en fonction de la consigne calculée, de sorte que cet outil est soit momentanément laissé en position, soit rapproché de manière limitée du modèle d'une distance d'élévation sensiblement proportionnelle à la valeur absolue de la consigne.

Selon une autre caractéristique, le modèle théorique de la nappe est calculé localement à partir notamment d'au moins :

- la courbe directrice, définie mathématiquement, notamment par une ligne dite axe en plan et par un profil en long, définis eux-mêmes par au moins une fonction paramétrée continue et dérivable, et comportant au moins une partie de courbe géométrique, et par exemple une succession de telles parties, chacune étant définie mathématiquement par une fonction paramétrée continue, simple, telle que droite, arc de cercle, parabole, clothoïde ou analogues ; et
- un profil en travers, défini mathématiquement par une fonction paramétrée continue, par exemple chaque profil en travers est une succession de segments de droites bouts à bouts.

Dans une réalisation, le procédé de l'invention est aussi destiné au rétablissement d'une nappe.

A cette fin, le procédé comporte, lors de la mémorisation dé courbes géométriques, au moins une phase prévoyant notamment une passe de mesure de la nappe existante, par exemple avec un engin similaire à celui prévu pour réaliser le rétablissement.

En outre, le procédé de l'invention prévoit une étape de contrôle latéral ou directionnel de la trajectoire longitudinale de l'engin et/ou de l'outil lors de la réalisation de la nappe, cette étape comportant les phases prévoyant de :

- définir une ligne auxiliaire de guidage que doit suivre l'engin lors d'une passe donnée de la réalisation, cette ligne de guidage étant par exemple à distance sensiblement constante de la courbe directrice ;
- analyser la position latérale mesurée en plan de l'outil en fonction de mesures fournies par le récepteur ; et
- en fonction de paramètres obtenus par cette analyse, calculer une commande d'asservissement latéral de l'engin apte à faire coïncider une trajectoire en plan de l'engin avec la ligne auxiliaire de guidage.

Par ailleurs, d'une part au moins de l'écart nul, trois bandes d'analyse sont prévues, à savoir :

- une première bande d'analyse à proximité de l'écart nul, dite centrale et définie par un ensemble d'écarts ;
- une deuxième bande d'analyse, dite médiane et définie par des écarts supérieurs à ceux de la bande centrale ; et
- une troisième bande d'analyse, plus éloignée de l'écart nul que les bandes centrale et médiane, dite extérieure et définie par un ensemble d'écarts supérieurs à ceux de la bande médiane ;

Dans une réalisation d'autres bandes d'analyse sont prévues d'autre part du modèle et/ou de l'écart nul, par exemple symétriques aux bandes centrale, médiane et extérieure par rapport à l'écart nul.

Lorsque les bandes d'analyse sont symétriques, par exemple supérieures et inférieures par rapport à l'écart nul, le traitement de l'ensemble des écarts considère seulement leur valeur absolue, la consigne correspondant à un écart de signe négatif étant égale à l'opposé de la consigne issue du traitement de la valeur absolue de cet écart.

Selon une autre caractéristique, le modèle théorique est à même d'être parcouru par l'engin le long de la courbe directrice et/ou le long d'une ligne auxiliaire de guidage, librement dans un sens ou dans un autre sens, par exemple opposé.

Dans une réalisation, le procédé de l'invention comporte une étape de reconnaissance automatique du sens d'avancement de l'engin le long de la courbe directrice et/ou de la ligne auxiliaire de guidage.

Par ailleurs, au moins deux passes successives sont prévues, par exemple en élévation, une ligne auxiliaire de guidage initiale, relative à une passe initiale, étant alors translatée en élévation d'une valeur prédéterminée pour définir une ligne auxiliaire de guidage ultérieure, relative à une passe suivante.

Selon une caractéristique, on mesure les positions de l'outil en un point de la nappe suivant une fréquence prédéterminée, et on compare la position d'élévation mesurée de l'outil avec l'altitude théorique définie à partir du modèle suivant ladite fréquence, la fréquence de mesure, traitement et calcul, étant définie, entre un instant de mesure et un instant suivant de mesure ultérieure, par une horloge du système de positionnement global, et est par exemple de l'ordre de 1 Hertz.

Dans une réalisation, le traitement des écarts selon le procédé de l'invention s'opère. comme suit.

D'un côté, si l'écart est déterminé dans une bande extérieure d'analyse, alors la consigne d'asservissement est de valeur constante, par exemple sa valeur absolue correspond à une distance de déplacement de l'outil de l'ordre de 10 millimètres.

D'un autre côté, si l'écart est déterminé dans une bande médiane d'analyse, alors est calculée une différence dite médiane ou quantité définie par une différence entre cet écart et une borne respective de cette bande la plus proche de l'écart nul, une consigne d'asservissement étant déduite de cette quantité.

Lorsque la valeur absolue de cette quantité est supérieure à une valeur d'action médiane maximale, alors la valeur absolue de la consigne d'asservissement est déterminée comme étant sensiblement égale à cette valeur, par exemple cette valeur correspond à une distance de déplacement de l'outil de l'ordre de 10 millimètres.

Lorsque la valeur absolue de cette quantité est inférieure à une valeur d'action médiane minimale, alors la valeur absolue de la consigne est déterminée comme étant sensiblement égale à cette valeur, par exemple cette valeur correspond à une distance de déplacement de l'outil de l'ordre de 4 millimètres.

Tandis que lorsque la valeur absolue de cette quantité est comprise entre des valeurs médianes maximale et minimale, alors la valeur absolue de la consigne est déterminée comme étant sensiblement égale à la valeur absolue de cette quantité.

Enfin, si l'écart est déterminé comme étant dans une bande centrale d'analyse, par exemple supérieure ou inférieure, alors est effectuée une étape de calcul d'une différence dite centrale entre la valeur absolue de cet écart et la valeur absolue d'un écart à un instant de calcul immédiatement précédent selon la valeur de la fréquence de traitement.

Lorsque cette différence centrale est négative ou nulle, alors la consigne est choisie sensiblement nulle, et par exemple la distance d'élévation de rapprochement de l'outil est nulle.

Lorsque cette différence est positive, alors est calculée une quantité dite centrale, égale à une fraction de la différence, par exemple de l'ordre d'un tiers de cette différence.

Si la quantité centrale est supérieure à une valeur centrale maximale, alors la valeur absolue de la consigne est déterminée comme étant sensiblement égale à cette valeur, par exemple cette valeur correspond à une distance de déplacement de l'outil de l'ordre de 4 millimètres.

Si la quantité centrale, est inférieure à une valeur d'action centrale minimale, alors la valeur absolue de la consigne est déterminée comme étant sensiblement égale à cette valeur, par exemple cette valeur correspond à une distance de déplacement de l'outil de l'ordre de 1 millimètre.

Tandis que si la quantité centrale, est comprise entre les valeurs d'action centrales minimale et maximale, alors la valeur absolue de la consigne est déterminée comme étant sensiblement égale à cette quantité centrale.

Dans un mode de réalisation, est calculée une courbe de régression, par exemple une droite, qui définit l'évolution moyenne des écarts déduits au cours d'un intervalle de temps prédéterminé, par exemple entre des temps d'une mesure antérieure et d'une mesure précédente.

Un écart de régression est extrapolé à partir de cette courbe de régression, et la consigne correspondant à l'écart déduit de la différence entre une position d'élévation mesurée et une altitude théorique est alors corrigée en fonction de la différence entre cet écart et l'écart extrapolé.

La correction appliquée à la consigne prévoit de remplacer, dans le calcul de cette consigne, d'une part la valeur de l'écart par la valeur d'un écart corrigé, d'autre part la valeur de l'écart précédent par la valeur d'un écart corrigé précédent.

Les valeurs de l'écart corrigé et de l'écart corrigé précédent sont respectivement égales à une moyenne pondérée de la valeur de l'écart et de l'écart extrapolé correspondant, et à une moyenne pondérée de la valeur de l'écart précédent et d'un écart extrapolé précédent correspondant.

Selon une caractéristique, des signaux ou trames reçus des récepteurs pour traitement, subissent des opérations de décodage et de filtrage, ces opérations permettant de transformer les trames en signaux numériques aptes à être traités, ainsi que d'éliminer toutes les mesures dont l'écart par rapport à une mesure précédente est supérieur à une valeur importante prédéterminée, par exemple de l'ordre de 100 mm.

En outre, une étape de numérisation est prévue par un module de numérisation.

Cette étape de numérisation comporte notamment les phases de :

- numérisation de données relatives au modèle théorique par exemple issu d'une conception assistée par ordinateur ;
- simulation du déplacement de l'engin sur le modèle théorique, pour vérifier la cohérence des données ;
- visualisation de paramètres du modèle théorique ; et
- création de fichiers informatiques aptes à être traités par un calculateur de pilotage du procédé.

Dans une réalisation, le modèle théorique est notamment défini par la courbe directrice et au moins un profil en travers, une étape étant prévue de calcul, par interpolation linéaire entre différents paramètres de profil en travers du modèle théorique, successifs ou continus le long de cette courbe directrice.

Par ailleurs, une étape automatique d'identification d'erreur dans la convergence limitée et/ou le traitement est prévue, telle qu'au moins une absence de mesure de position par le récepteur, une défaillance de communication, une erreur de numérisation du modèle théorique, une erreur de transmission de l'information de positionnement global vers un calculateur, une erreur de calcul d'asservissement, ou une erreur de positionnement propre à l'engin.

Le procédé de l'invention prévoit en outre l'utilisation d'au moins un deuxième récepteur et/ou au moins un capteur d'attitude, par exemple un inclinomètre ou un capteur de dévers, et prévoit trois modes de fonctionnement distincts : un mode dit de priorité à la gauche de l'outil, un mode dit de priorité à la droite de l'outil, et un mode sans priorité, notamment pour la réalisation de profils en travers brisés ou analogues, de la nappe.

Un deuxième objet de l'invention est un dispositif de commande et d'asservissement destiné à la réalisation selon un modèle théorique d'une forme utile projetée telle qu'une nappe de projet routier ayant un profil topographique prédéterminé à partir d'un corps délimité par une enveloppe tridimensionnelle, à l'aide d'un outil monté sur un engin coopérant avec un système de fonctionnement global par satellite.

Selon une caractéristique, ce dispositif comprend notamment au moins :

- un module de positionnement comprenant au moins un récepteur de positionnement global destiné à mesurer au moins à un instant la position de l'outil ;

- un module de numérisation apte à mémoriser des courbes géométriques fixées propres à la nappe et à associer à la position mesurée de l'outil un emplacement le long de la courbe directrice ;

- un calculateur apte à traiter des informations provenant d'une part du module de positionnement et d'autre part d'une partie utile seulement du modèle théorique, accessible par exemple à l'aide d'un fichier créé par le module de numérisation, afin de pouvoir comparer une position d'élévation mesurée de l'outil avec une altitude théorique définie à partir du modèle, déduire un écart d'élévation à l'instant précité, cet écart étant dit écart nul lorsque la position d'élévation mesurée est sensiblement confondue avec l'altitude théorique, définir d'une part au moins de l'écart nul au moins deux bandes d'analyse, identifier une bande d'analyse active à laquelle appartient l'écart d'élévation, et calculer, en fonction dudit écart d'élévation et de la bande d'analyse active, une consigne d'asservissement d'élévation ;

- un automate, par exemple programmable, pouvant être commandé par le calculateur ; et

- des distributeurs d'élévation respectivement droit et gauche et de direction de l'outil, pouvant être commandés par l'automate et destinés à agir sur la position d'élévation de l'outil en fonction de la consigne d'asservissement.

Le calculateur de ce dispositif comprend notamment au moins trois sous-ensembles, à savoir :

- un noyau de décodage et de filtrage ;

- un noyau de localisation ; et

- des moyens d'asservissement reliés aux distributeurs d'élévation et de direction de l'outil par l'intermédiaire de l'automate.

Selon une caractéristique, ces noyau de décodage et de filtrage ainsi que de localisation, comportent des programmes informatiques de calcul numérique, des applications issues de logiciels de calcul numérique ou analogues.
Par ailleurs, le dispositif de l'invention comprend des moyens de transmission au calculateur, à chaque instant, d'informations sous forme de messages codés, notamment relatives à une position longitudinale, transversale et d'élévation de chaque récepteur mobile.
En outre, ce dispositif comporte des moyens de sécurité, aptes à détecter ou identifier un arrêt de fonctionnement des récepteurs mobiles et/ou aptes à faire basculer ce dispositif d'un mode de fonctionnement automatique à un mode de fonctionnement manuel suivant lequel un chauffeur de l'engin contrôle entièrement ce dernier.
Selon une caractéristique, ce dispositif comprend des moyens de reconnaissance automatique du sens d'avancement de l'engin le long de la courbe directrice et/ou d'une ligne auxiliaire de guidage du modèle théorique.
Un troisième objet de l'invention est un engin apte à mettre en oeuvre le procédé de l'invention et/ou comportant au moins un dispositif de l'invention, tel que niveleuse de terrassement, benne verseuse de remblai, machine de coulée continue de béton, grignoteuse de structure existante, chasse-neige ou analogues.
Selon une caractéristique, cet engin comporte au moins un outil avec au moins un récepteur de positionnement global, par exemple deux récepteurs, montés sur des mâts respectifs à proximité des extrémités transversales de l'outil.
Selon une autre caractéristique, cet engin comporte au moins un outil avec au moins un récepteur de positionnement global par exemple à proximité des extrémités transversales de l'outil et au moins un capteur d'attitude.
En outre, cet engin est pourvu par exemple dans une cabine d'habitacle d'un chauffeur de cet engin, de moyens de visualisation tels qu'au moins un écran, par exemple à cristaux liquides ou analogues.
Selon une caractéristique, ces moyens de visualisation comportent au moins un écran d'accueil et de paramétrage, un écran de travail et un écran d'informations géométriques, l'écran d'accueil et de paramétrage étant par exemple tactile pour permettre à un chauffeur du véhicule d'initialiser un dispositif de commande et d'asservissement.
Selon une autre caractéristique, l'engin de l'invention comporte des moyens automatiques d'asservissement de sa direction, par exemple commandés par un dispositif de commande et d'asservissement de l'invention, ces moyens d'asservissement de direction étant aptes à automatiquement faire converger une trajectoire de déplacement de l'engin vers et le long d'une ligne auxiliaire de guidage.
Dans une réalisation, l'engin de l'invention comporte des moyens de réglage de la position transversale de l'outil autour d'une direction d'élévation, apte à permettre la convergence limitée de la trajectoire de cet outil vers et le long d'une ligne auxiliaire de guidage.
En outre, cet engin comporte notamment une manette de direction et des moyens de détermination de priorité d'un mode automatique, cette détermination permettant par un mouvement de cette manette opérée par un chauffeur, de faire passer le fonctionnement du dispositif de commande et d'asservissement de l'invention, d'un mode automatique vers un mode manuel.
L'invention permet d'obtenir, à partir d'un corps existant tel que terrain, construction ou analogues, une nappe de projet routier, grâce au procédé et/ou à l'aide d'au moins un dispositif de commande et d'asservissement et/ou avec au moins un engin de chantier tels que précédemment décrits, ladite nappe ayant des dénivellations le long de la courbe directrice du modèle théorique comprises entre - 13 mm et + 13 mm au plus, par rapport au modèle, de part et d'autre en élévation.

L'invention est maintenant décrite en détail, en se rapportant ,aux dessins annexés de modes de réalisation donnés à titre d'exemples.

Dans ces dessins :

- la figure 1 est une vue en élévation longitudinale schématique de réalisation d'une nappe selon l'invention ;
- la figure 2 est un schéma synoptique du dispositif, et illustrant le fonctionnement d'un mode de réalisation du procédé selon l'invention ;
- la figure 3 est une vue en plan de dessus d'un modèle théorique et d'une nappe en cours de réalisation par le procédé de l'invention ;
- la figure 4 est une vue en coupe d'élévation longitudinale, d'un modèle théorique et d'une nappe en cours de réalisation par le procédé de l'invention ;
- la figure 5 est une vue en coupe d'élévation transversale, d'un modèle théorique et d'une nappe en cours de réalisation par le procédé de l'invention ;
- la figure 6 est une vue en coupe d'élévation transversale d'un outil d'engin selon l'invention, et d'une nappe en cours de réalisation par le procédé de l'invention, selon un mode dit de priorité à gauche de l'outil ou « priorité à gauche » ;
- la figure 7 est une vue en coupe d'élévation transversale d'outil d'engin de l'invention, et d'une nappe en cours de réalisation par le procédé de l'invention, selon un mode dit de priorité à droite de l'outil ou « priorité à droite » ;
- la figure 8 est une vue en coupe d'élévation transversale d'un outil d'engin de l'invention, et d'une nappe en cours de réalisation par le procédé de l'invention, en mode dit « sans priorité » ;
- la figure 9 est un schéma illustrant un mode de réalisation de l'invention, sur lequel on voit des écarts classés dans des bandes d'analyse, définis par rapport à l'écart nul.
- la figure 10 est un schéma illustrant un mode de réalisation de l'invention, sur lequel on voit une courbe de régression, définie par rapport à l'écart nul.

Sur les figures, est représenté un repère orthogonal direct XYZ. Ce repère définit trois directions dans l'espace, par rapport auxquelles l'invention est décrite.

Une direction X dite longitudinale correspond ici à la direction usuelle de déplacement lors de la réalisation selon l'invention. Les termes « longitudinalement », ainsi que « avant » et « arrière » sont définis suivant cette direction X. Une localisation avant étant opposée longitudinalement à une localisation arrière.

Une autre direction Y dite transversale, permet de définir les termes « transversalement » ou « latéralement », ainsi que « gauche » et « droite », suivant cette direction Y.

Ici, les directions longitudinale X et transversale Y sont considérées comme étant sensiblement horizontales, pour plus de simplicité.

Quant à une direction Z, dite d'élévation, elle est considérée ici comme étant sensiblement verticale. Les termes « haut » et « bas », ainsi que « supérieur » et « inférieur » sont définis suivant cette direction Z.

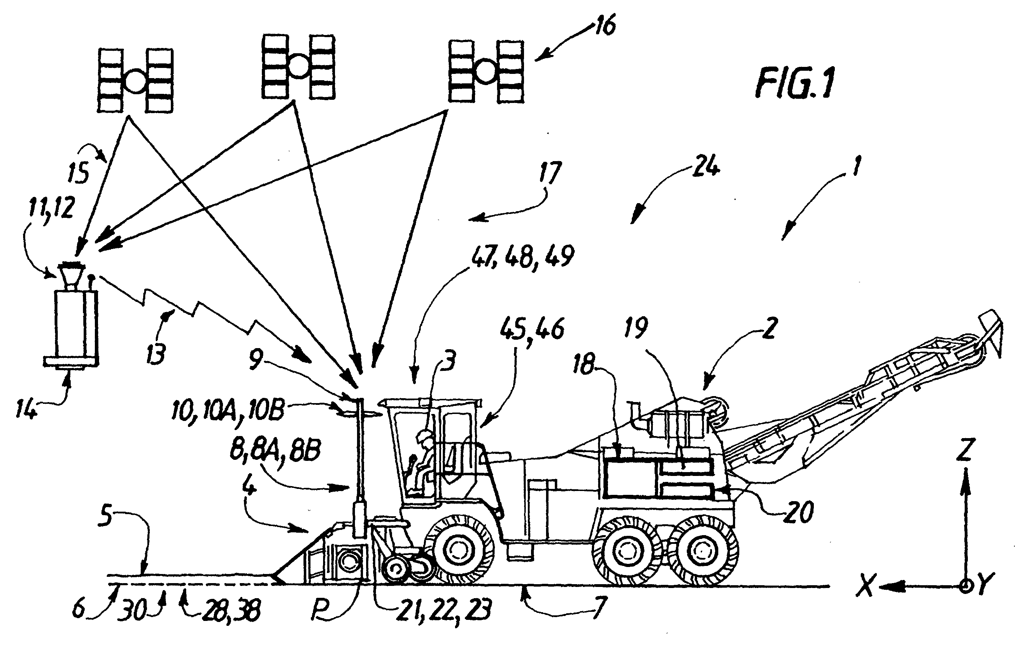

Sur la figure 1, on voit un chantier 1, par exemple pour la réalisation d'un projet linéaire routier, ferroviaire, aéroportuaire ou analogues, ou d'un projet non linéaire tel qu'une plate - forme industrielle.

Sur le chantier 1 est déplacé un engin 2 de terrassement. L'invention s'applique aussi à d'autres engins 2, tels que décapeuse, niveleuse, scarificateur, bouteur, déneigeuse ou analogues.

Sur la figure 1 est représenté un seul engin 2, mais l'invention s'applique aussi à une pluralité d'engins 2 de même type et/ou de types différents, oeuvrant ensemble, c'est-à-dire sensiblement simultanément, par exemple les uns à côté des autres et/ou les uns derrières les autres.

Un chauffeur 3, de l'engin 2, commande notamment l'accélération et le freinage de cet engin.

L'engin 2 est pourvu d'un outil 4, par l'intermédiaire duquel il réalise, à partir d'un corps 5 délimité par une enveloppe tridimensionnelle telle que terrain, construction ou analogues, et suivant un modèle théorique 6, une nappe 7.

Sur l'outil 4 est ici fixé au moins un mât 8.

Sur la figure 1, sont fixés respectivement à ses deux extrémités transversales gauche et droite, deux mâts respectivement gauche 8A et droit 8B sensiblement verticaux.

Chaque mât 8, 8A, 8B est notamment pourvu de moyens de communication radio 9.

Chaque mât est également pourvu d'un récepteur de positionnement global par satellite dit récepteur mobile, respectivement gauche 10A et droit 10B.

Dans une réalisation non illustrée, l'engin 2 est pourvu d'un unique récepteur mobile 10, fixé par exemple sur un mât 8 au centre de l'outil 4, et de deux capteurs de position tels que capteurs de dévers, inclinomètres ou analogues, fixés par exemple à proximité de chacune des extrémités de l'outil.

On comprend que le nombre de récepteurs mobiles ainsi que leur disposition sur l'outil 4, dépendent notamment de la forme de cet outil.

Dans d'autres réalisations non décrites, dans lesquelles la forme de l'outil 4 est différente, on compte plus de deux récepteurs mobiles.

Par exemple, dans le cas où l'outil 4 est en forme de triangle, trois récepteurs mobiles sont disposés sur des mâts à chaque sommet du triangle.

Les moyens de communication radio 9 disposés sur ces mâts 8, 8A, 8B sont prévus notamment pour communiquer avec au moins un poste référentiel fixe 11, en communication avec les moyens 9 par l'intermédiaire d'ondes radio 13.

Ce poste fixe est installé sur le chantier 1 à un emplacement ou point 14, dont la localisation topographique est parfaitement connue.

Le point 14 fait ainsi office de référence fixe pour la réalisation de la nappe 7.

Le poste fixe 11 comprend ici au moins un récepteur de positionnement global par satellite fixe 12, situé à la verticale du point de référence 14 du chantier 1.

Sur la figure 1, un seul poste fixe 11 et un seul récepteur fixe 12 sont prévus.

Dans des réalisations, plusieurs postes 11 et/ ou récepteurs 12 sont installés sur le chantier 1.

Dans une réalisation, chaque récepteur 10, 10A, 10B, 12 est un récepteur de type GPS.

Les récepteurs fixes 12, ainsi que mobiles 10, 10A, 10B de l'engin 2, sont prévus pour recevoir des signaux 15 émis par une constellation de satellites 16, par exemple émettant des signaux GPS, dont trois sont ici représentés.

Actuellement, trois à dix satellites d'une constellation 16 assurent en pratique la couverture permettant le positionnement global d'un récepteur tel que ceux désignés ici en 10, 10A, 10B et 12.

Dans la réalisation illustrée, chaque récepteur 10, 10A, 10B, 12 est utilisé suivant des modes :

- bi - fréquence ;
- différentiel et par exemple bi-différentiel ;
- cinématique ; et
- temps réel.

Chaque satellite de la constellation 16 émet deux types de signaux 15, en fonction du niveau de précision requis, à savoir :

- des signaux codés d'acquisition, soit grossière, soit précise ; et
- deux signaux de calcul de distance, respectivement sous forme d'ondes émises, sur deux fréquences différentes, ici respectivement 1575.42 MHz et 1227.60 MHz.

On n'utilise pas dans l'invention les signaux codés d'acquisition, du fait de leur imprécision de l'ordre de 25 à 100 mètres.

Mais puisque l'invention vise une précision de l'ordre d'au plus une dizaine de millimètres, on utilise les deux signaux de calcul de distance, suivant un mode dit bi-fréquence.

Ce mode bi-fréquence consiste à calculer une ambiguïté, c'est-à-dire compter le nombre de longueurs d'onde complètes réalisées par chacun des deux signaux de calcul pour parcourir la distance entre un satellite et le récepteur à localiser.

Puis est déterminé un appoint, avec une précision de 0.2 mm.

La somme du nombre de longueurs d'ondes ou phases et de l'appoint, est multipliée par la longueur d'onde de chaque signal de calcul pour déterminer la distance entre le ou les satellites et le ou les récepteurs.

En fait, les résultats du calcul d'ambiguïté d'un récepteur fixe 12 de position connue, sont comparés avec cette position connue, et permettent de déterminer une correction instantanée unitaire émise à l'aide des ondes radio 13, aux récepteurs mobiles 10, 10A, 10B qui observent les mêmes satellites au même instant : c'est le mode différentiel.

Dans d'autres réalisations, plusieurs récepteurs fixes 12 sont prévus, par exemple deux récepteurs fixes, le mode de fonctionnement étant alors dit bi-différentiel.

L'un des deux récepteurs - celui du poste 11 - étant fixe et servant de référence, l'autre dont on veut déterminer la position étant mobile, on qualifie ce mode de cinématique.

En outre, les calculs d'ambiguïté étant effectués en permanence durant la réalisation d'une nappe 7, on parle ici de mode temps réel.

Ces différents modes permettent d'obtenir dans la réalisation de la nappe 7 un degré d'exactitude nécessaire pour atteindre les objectifs de précision de l'invention.

Mais cette dernière permet d'atteindre ces objectifs avec d'autres techniques pourvu qu'elles assurent un degré d'exactitude équivalent ou supérieur.

Un système de positionnement global tel que le système GPS est généralement capable d'effectuer des calculs de position à une fréquence F.

Cette fréquence F est ici de 1Hz.

Les résultats des calculs d'ambiguïté de position sont dits points synchrones.

Entre ces points, le système de positionnement global peut extrapoler des points à une fréquence plus élevée, par exemple F/10, soit ici 10 Hz.

Dans la pratique, l'extrapolation se dégrade lorsque la transmission radio devient plus aléatoire, par exemple lorsque des obstacles s'interposent entre les récepteurs fixes 12 et les récepteurs mobiles 10, 10A, 10B, ou lorsque la distance entre eux devient trop importante par exemple environ 15 km.

Dans un mode de réalisation, on n'exploite pas les données extrapolées, mais seulement les points synchrones.

Le calcul de ces points synchrones est effectué ici pour chaque récepteur.

Les récepteurs 10, 10A, 10B et 12, le poste 11, les moyens de communication radio 9 et les satellites notamment, forment un module de positionnement 17 qui transmet à chaque instant N des informations de position à un calculateur 18, par exemple sous forme de signaux numériques.

Dans une réalisation, le calculateur 18 est monté sur ou dans l'engin 2. Dans d'autres réalisations, il se trouve sur le chantier 1, par exemple sur le poste fixe 11.

D'une part, les informations transmises par le module de positionnement 17 au calculateur 18 sont relatives au moins à la position des récepteurs mobiles 10, 10A, 10B, et donc notamment à la position des extrémités gauche et droite de l'outil 4 de l'engin 2 sur le chantier 1.

Cette position est dite position mesurée de l'outil 4.

D'autre part, le calculateur 18 reçoit des informations, par exemple sous forme de signaux numériques, d'un module de numérisation 19, également illustré sur la figure 1 notamment.

Ce module de numérisation 19 est ici un programme informatique de construction assistée (CAO), qui fonctionne sur un ordinateur.

Le module de numérisation 19 est ici embarqué sur l'engin 2. Comme le calculateur 18, dans des réalisations, il se trouve sur le chantier 1, par exemple dans un abri pour le personnel travaillant sur le chantier 1 ou sur le poste 11.

Dans le module de numérisation 19 est emmagasiné, c'est-à-dire mémorisé ou stocké, un modèle théorique 6 représentatif d'un profil topographique tel que souhaité en vue de sa réalisation.

Parallèlement aux informations de position mesurée transmises du module de positionnement 17 au calculateur 18, le module de numérisation 19 transmet à chaque instant N des informations au calculateur 18, indiquant notamment une position instantanée souhaitée de chaque extrémité de l'outil 4 au sein du modèle théorique 6.

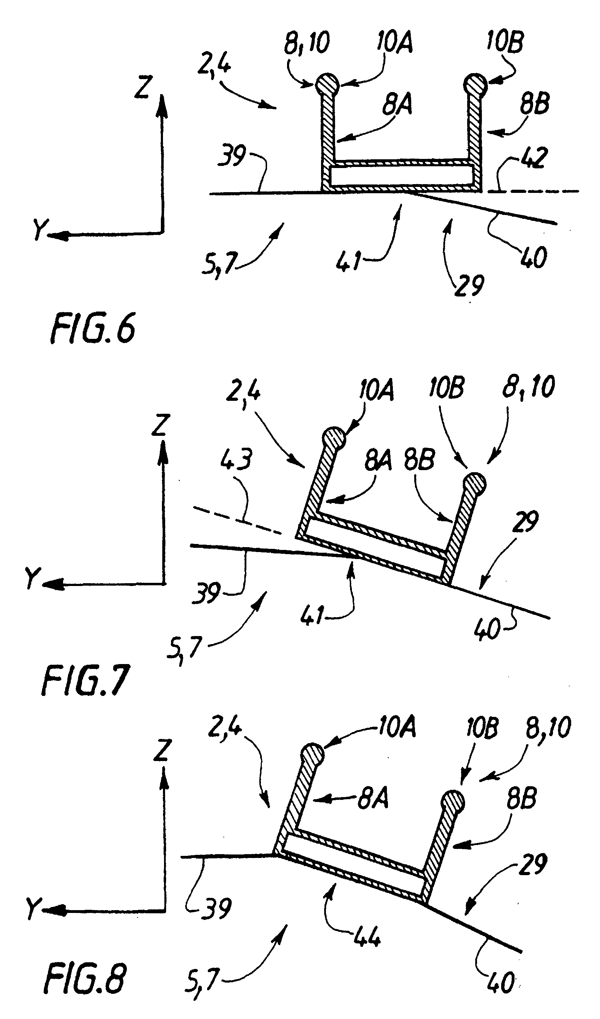

Cette position est dite position théorique, et est illustrée en $P_{TH}$ sur les figures 4 et 5.

Le calculateur 18 compare les positions théorique et mesurée pour notamment chaque extrémité de l'outil 4.

Pour chaque comparaison est calculé un écart noté E(N), cet écart étant calculé à chaque instant N, à la fréquence F.

Le calculateur 18 traite ensuite les écarts, en vue d'agir si nécessaire sur la position de l'outil 4, notamment de chacune de ses extrémités.

Ainsi, à chaque instant, il est possible d'agir sur l'outil 4 afin de faire converger ou coïncider ses positions mesurée et théorique.

Comme on le voit plus loin, dans certaines situations, les positions mesurée et théorique ne coïncident pas parfaitement dans la pratique.

Paradoxalement, pour atteindre la précision visée par l'invention, cette dernière ne considère pas exclusivement les positions et modèles théoriques.

Elle traite en fait les données de manière sélective de façon à ce que la nappe 7 soit comprise à l'intérieur d'une zone de tolérance entourant ces positions et modèles théoriques.

On comprendra par la suite que l'invention autorise en quelque sorte que la position mesurée soit momentanément distincte de la position théorique, pour procéder à une convergence limitée du profil réel vers le profil théorique.

C'est pourquoi on définit une telle zone de tolérance autour de chaque position théorique.

Ici, cette zone est égale à ± 13 mm.

Bien sûr, selon les exigences de qualité, des réalisations de l'invention prévoient une zone de tolérance plus large, par exemple ± 15 mm, ± 20 mm, voire ± 50 mm.

On reviendra ensuite sur le traitement des écarts par le calculateur 18, la convergence de la nappe 7 vers le modèle théorique 6 découlant de ce traitement.

Chaque fois qu'un tel traitement est effectué, le calculateur 18 transmet une consigne, sous forme de signaux numériques par exemple, à un automate 20, ici programmable et monté sur l'engin 2 (figure 1).

L'automate 20 convertit alors les signaux numériques en signaux de commande analogiques.

L'automate 20 transmet ces signaux analogiques notamment à des distributeurs d'élévation ici hydrauliques gauche 21, droit 22 et de direction 23 de l'outil 4, pour les commander.

Les distributeurs d'élévation gauche 21 et droit 22 effectuent une correction, respectivement de la position d'élévation des extrémités gauche et droite de l'outil 4.

Tandis que le distributeur 23 a pour fonction d'orienter l'engin 2 et/ou l'outil 4 autour de la direction d'élévation Z, ici en agissant sur des roues directrices de l'engin 2.

Dans une réalisation, le distributeur 23 de direction agit sur l'orientation de l'outil 4 par rapport à l'engin 2, et indépendamment des roues directrices de ce dernier.

Notons qu'ici, à chaque fonction de correction d'élévation droite, gauche et d'orientation, est attribué un distributeur 21, 22 et 23 respectivement tel que vérin double effet.

Des réalisations prévoient au moins deux distributeurs pour chacune de ces fonctions, tels que vérin simple effet en opposition.

De manière similaire, sont décrits ici des distributeurs hydrauliques, mais d'autres sources de puissance, par exemple électrique, sont employées dans des réalisations.

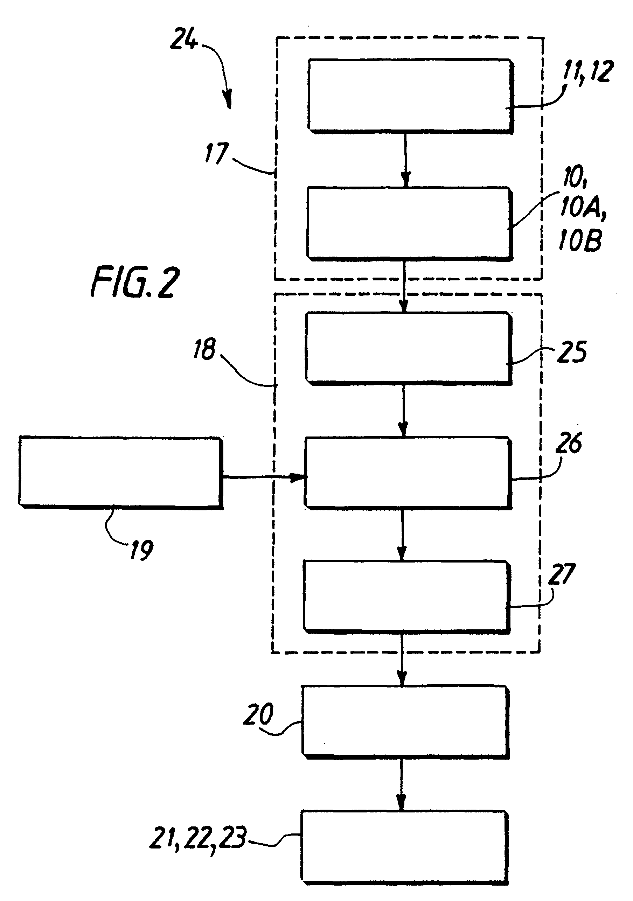

Les distributeurs 21, 22 et 23 apparaissent aussi sur la figure 2, qui illustre une mise en pratique du procédé selon l'invention.

Cette figure 2 représente schématiquement un dispositif 24 de commande et d'asservissement selon l'invention qui comprend notamment le module de positionnement 17, le calculateur 18, le module de numérisation 19, l'automate 20 et les distributeurs gauche 21, droit 22 et de direction 23 de l'outil 4.

Le calculateur 18 comprend notamment trois sous - ensembles :

- un noyau de décodage et de filtrage 25 ;
- un noyau de localisation 26 ; et

- des moyens d'asservissement 27.

Les noyaux 25 et 26 sont, selon les exemples, des programmes informatiques de calcul numérique, des applications issues de logiciels de calcul numérique, ou analogues.

Dans une réalisation, le noyau de décodage et de filtrage 25, et le noyau de localisation 26 font partie d'un sous - ensemble commun du calculateur 18.

Il ressort aussi de la figure 2 que le module de positionnement 17 transmet au calculateur 18, à chaque instant N, des informations sous forme de messages codés dits trames, relatives à la position longitudinale, transversale et d'élévation de chaque récepteur mobile 10, 10A, 10B.

On comprend que, sensiblement à la longueur - constante et connue - d'un mât 8, 8A, 8B près, la position d'élévation d'une extrémité de l'outil 4 est immédiatement déduite de la position du récepteur 10, 10A, 10B correspondant.

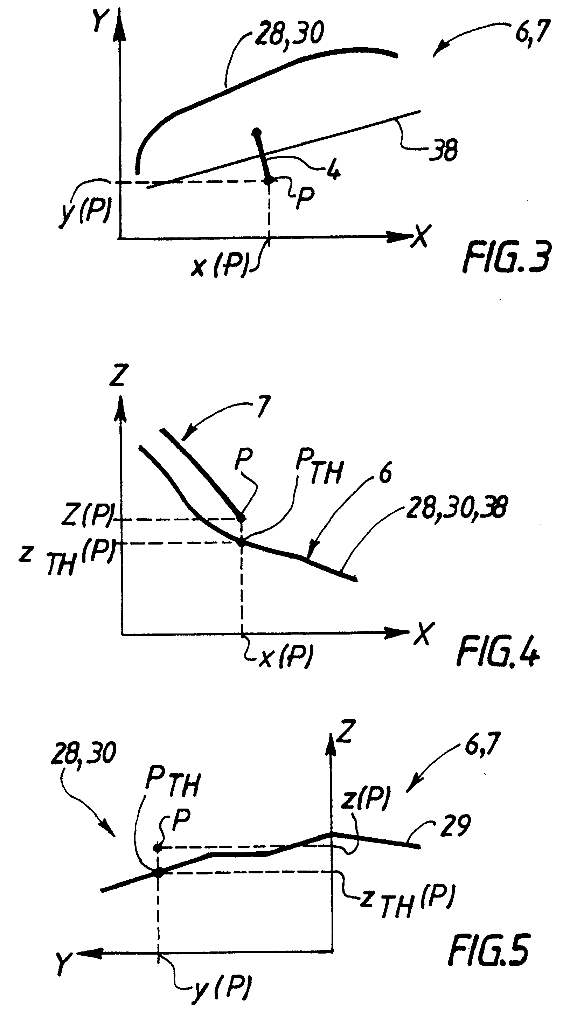

Sur les figures 3 à 5, les positions respectives suivant les directions longitudinale X, transversale Y et d'élévation Z de chaque extrémité de l'outil 4 dans le repère défini plus haut, sont désignées en x, y et z.

Ces positions variant au cours du temps, elles sont désignées de manière générale en x(N), y(N) et z (N).

Ainsi, pour un instant donné auquel une extrémité de l'outil 4 se trouve en un point P, ces positions sont désignées en x(P), y(P) et z(P).

L'obtention des positions x, y, z n'est pas immédiate. Elle nécessite auparavant que le noyau de décodage et de filtrage 25 reçoive les informations ou trames du module de positionnement 17.

La réception des trames depuis le module de positionnement 17 vers le calculateur 18 du dispositif de commande et d'asservissement 24 s'effectue ici en deux étapes.

D'abord, le noyau 25 décode les deux trames sensiblement simultanément, suivant la fréquence F unique définie par l'horloge de haute précision du système de positionnement global.

A cette fin, un algorithme de communication du calculateur 18 décode ou déchiffre alors les deux trames, issues des récepteurs 10, 10A, 10B.

Chaque trame ainsi décodée est alors associée à l'instant N correspondant, suivant le temps local du système de positionnement global.

Lorsqu'un récepteur 10, 10A, 10B se trouve dans l'incapacité de fournir une information, par exemple en cas de non - réception d'une onde 15 ou d'erreur de calcul, il n'émet pas de trame.

En contrôlant la fréquence d'arrivée des trames, le noyau 25 détecte et identifie l'arrêt d'au moins un récepteur 10, 10A, 10B.

Ensuite, c'est-à-dire après les avoir décodées, le noyau 25 filtre les trames.

On sait pour ce filtrage que dans des conditions usuelles de réalisation d'une nappe 7, il est peu probable que deux mesures consécutives du système de positionnement global représentent un écart d'élévation de plus de 100 mm.

En effet, l'écart d'élévation entre deux points distants longitudinalement le long de la nappe, de quelques centaines de millimètres, est très faible : par exemple, une pente de 10 % à la vitesse de 2 km/h pendant 1 s engendre une variation d'élévation ou d'altitude de 60 mm.

Le noyau 25 est donc agencé pour filtrer, c'est-à-dire éliminer toutes les mesures dont l'écart avec la mesure précédente est supérieur à 100 mm.

Selon l'invention, le calculateur 18 possède une mémoire de traitement telle que mémoire vive, agencée pour que les données de la mesure précédente soient néanmoins conservées comme référence, mais exclusivement jusqu'au traitement suivant.

Après chaque traitement, la mémoire du calculateur 18 efface (ou éventuellement transfère vers des moyens d'enregistrement de masse tels que disque dur), les données de l'antépénultième mesure. Par exemple, les moyens d'enregistrement de masse sont à distance de l'engin 2 et reliés au calculateur par des moyens de transmission, par exemple via l'onde radio 13 en retour.

Il n'est donc pas nécessaire de recourir à des moyens informatiques de traitement lourds, grâce à l'invention.

Tout en pouvant réaliser une nappe 7 de haute précision, à une vitesse de traitement élevée.

A l'issue de ce filtrage, le calculateur 18 procède à un calcul de localisation au moyen du noyau 26.

Pour effectuer ce calcul, le noyau de localisation 26 utilise notamment des données en provenance du module de numérisation 19 évoqué plus haut.

Les fonctions principales de ce module 19 sont notamment :

- importation de données relatives au modèle théorique 6 issus d'une conception assistée par ordinateur ;
- construction d'un tel modèle théorique 6 à partir de données papier ;
- simulation du déplacement d'un engin 2 sur ce modèle, pour vérifier la cohérence des données ;
- visualisation de « l'axe en plan » et du « profil en long » du modèle théorique 6 ; et
- création de fichiers informatiques pour le calculateur 18.

Dans le module 19, le modèle 6 est ici défini par au moins une courbe directrice 28 et au moins un, et par exemple une pluralité de profils en travers 29.

La courbe directrice 28 est mémorisée dans le module de numérisation 19 par deux lignes dites axe en plan et profil en long, correspondant à deux vues, respectivement plane de dessus, et d'élévation longitudinale.

Cette courbe directrice est une succession continue de courbes géométriques 30 bidimensionnelles définies par des équations mathématiques simples, telles que droites, arcs de cercle, paraboles, courbes de raccordement dites « clothoïdes » notamment.

Tandis que les profils en travers 29 modélisent autant de sections d'élévation transversales du profil topographique le long de la courbe directrice 28.

Cette définition mathématique du modèle théorique 6 rend ainsi possible d'emmagasiner ou mémoriser ce dernier dans un espace mémoire restreint tel que quelques dizaines de kilo - octets de mémoire dans le module de numérisation 19.

De plus, il est possible d'accéder à une ou à certaines parties utiles seulement du modèle théorique 6 pour traitement par le calculateur, par exemple à l'aide d'un fichier glissant ou analogues.

L'invention ne nécessite donc pas une modélisation numérique complète du modèle 6, telle qu'une série ou « semis » de points, ce qui permet aussi de recourir à des moyens informatiques légers.

Cela participe également à une vitesse de traitement élevée.

En outre, il est aussi possible de gagner du temps lors du transfert de données entre le module de numérisation 19 et le calculateur 18.

Chaque calcul de localisation tel qu'expliqué, consiste à déterminer des éléments relatifs à la position réelle d'un point P, qui définit ici une extrémité transversale de l'outil 4 de l'engin 2.

Ce point P apparaît sur les figures 1, 3, 4 et 5.

Le point P est dépendant de l'instant N, on peut donc le noter P(N).

Les éléments relatifs à la position du point P à un instant N sont ici :

- son abscisse curviligne s(P) sur la courbe directrice 28 du modèle 6 de la nappe 7 ;
- son abscisse mesurée x(P) suivant la direction longitudinale X, confondue avec l'abscisse x(N) définie plus haut ;
- son ordonnée mesurée y(P) suivant la direction transversale Y, confondue avec l'ordonnée y(N) définie plus haut ;
- sa position d'élévation ou altitude mesurée z(P) suivant la direction Z verticale, confondue avec l'altitude z(P) définie plus haut ;
- sa position d'élévation ou altitude théorique $z_{TH}(P)$ sur le modèle théorique 6 ;
- un gisement B de la nappe 7 au point P, c'est-à-dire l'angle transversal de la tangente en P à la courbe directrice 28 par rapport à l'axe longitudinal instantané de l'outil 4 ;
- le dévers de la nappe 7 au point P ;
- le déport au point P, c'est à dire la distance du centre de l'outil 4 à la courbe directrice 28 du modèle théorique 6 de la nappe 7 ;

- la pente de la nappe au point P dans un plan d'élévation longitudinale ;
- la ou les erreurs de calcul éventuelles ;
- un élément d'axe en plan de la nappe 7 aux environs du point P tel qu'illustré à la figure 3 ;
- un élément de profil en long aux environs du point P tel qu'illustré sur la figure 4 ; et
- le profil en travers 29 au point P tel qu'illustré à la figure 5.

Cette liste non exhaustive est représentative d'un mode de réalisation.

L'altitude z(P) est obtenue par les mesures effectuées par les récepteurs de positionnement global 10, 10A, 10B, 12.

L'altitude théorique $z_{TH}(P)$ est quant à elle déduite par le calculateur à partir du modèle théorique 6 et des positions longitudinale et transversale mesurées du point P.

L'altitude mesurée z(P) du point P est comparée avec précision à l'altitude théorique $z_{TH}(P)$ du point P sur le modèle 6.

De cette comparaison est déduit l'écart E(N), défini ici par :

$$E(N) = z(P) - z_{TH}(P)$$

Un écart positif indique que l'outil 4 est positionné trop haut, c'est-à-dire au-dessus du modèle 6 suivant la direction Z.

Un écart négatif indique que l'outil 4 est positionné trop bas, c'est-à-dire au - dessous du modèle 6 suivant la direction Z.

Lorsque l'altitude mesurée z(P) est confondue avec l'altitude théorique $z_{TH}(P)$, l'écart E(N) est nul, et est dit écart nul, noté E0.

On a vu que l'écart E(N) est déduit des informations de positionnement fournies par les récepteurs 10, 10A, 10B.

Si ces informations avaient une précision inférieure à celle visée pour la nappe 7, la transmission aux distributeurs 21, 22 et 23 de l'outil 4 d'une consigne d'asservissement - E(N) égale à l'opposé de l'écart E(N), suffirait à faire coïncider les altitudes mesurée et théorique de l'outil 4.

Or, en pratique, les informations fournies par les récepteurs 10, 10A, 10B oscillent : on parle alors de « bruit de la mesure ».

On a constaté aussi que ce bruit est centré sur la moyenne des indications avec un écart type ET de 15 mm environ.

Pour que des oscillations inhérentes aux récepteurs de positionnement global ne se retrouvent pas dans la réalisation de la nappe 7, Il est nécessaire de s'affranchir de ce bruit.

A cette fin, le calculateur 18 traite les écarts E(N) en chaque point P.

On peut ainsi faire converger de manière limitée la nappe 7 réalisée par l'outil 4, vers le modèle théorique 6.

Ici cette convergence est limitée, pour éviter des corrections erronées de l'outil 4, dues par exemple à des erreurs de mesure des récepteurs 10, 10A, 10B, ou à des irrégularités subies par l'outil 4 lors du travail de l'enveloppe 5, par exemple au contact de points durs tels que cailloux ou analogues.

Dans un mode de réalisation, le traitement des écarts est informatique, et réalisé par les moyens d'asservissement 27 du calculateur 18.

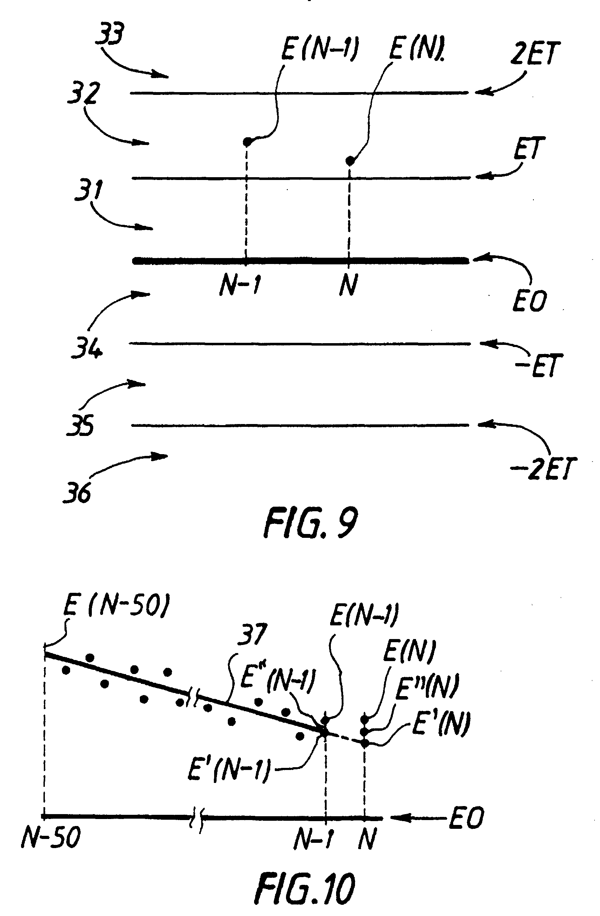

Ce traitement prévoit notamment de classer les écarts E(N) dans au moins deux bandes d'analyse différentes 31, 32, 33 illustrées sur la figure 9.

Pour chaque écart E(N) est ainsi déduite une consigne correspondante C(P) destinée à au moins l'un des distributeurs 21, 22 ou 23 de l'outil 4.

Chaque bande d'analyse est ici un intervalle contenant un ensemble d'écarts.

Dans une réalisation, six bandes d'analyse sont prévues, dont une paire de bandes centrales d'analyse 31, 34, une paire de bandes médianes d'analyse 32, 35 et une paire de bandes extérieures d'analyse 33, 36 (figure 9).

Parmi ces bandes d'analyse, trois, respectivement centrale supérieure 31, médiane supérieure 32 et extérieure supérieure 33 couvrent l'ensemble des écarts supérieurs à l'écart nul E0.

Tandis que trois autres bandes d'analyse, respectivement centrale inférieure 34, médiane inférieure 35 et extérieure inférieure 36 couvrent l'ensemble des écarts inférieurs à l'écart nul E0.

Sur cette figure, les bandes d'analyse centrales respectivement supérieure 31 et inférieure 34, médianes respectivement supérieure 32 et inférieure 35, et extérieures respectivement supérieure 33 et inférieure 36 sont deux à deux symétriques par rapport à l'écart nul E0.

Ici la bande d'analyse centrale supérieure 31 est définie par l'ensemble des écarts compris entre l'écart nul et l'écart type ET.

Tandis que la bande d'analyse médiane supérieure 32 est définie par l'ensemble des écarts compris entre l'écart type ET et le double de l'écart type, noté 2ET.

Et la bande d'analyse extérieure supérieure 33 est définie par l'ensemble des écarts supérieurs au double de l'écart type 2ET.

Les bandes d'analyse étant ici deux à deux symétriques, on comprend que la bande d'analyse centrale inférieure 34 est définie par l'ensemble des écarts compris entre l'écart nul E0 et l'opposé de l'écart type, noté - ET.

Tandis que la bande d'analyse médiane inférieure 35 est définie par l'ensemble des écarts compris entre l'opposé de l'écart type - ET et l'opposé du double de l'écart type, noté - 2ET.

Et la bande d'analyse extérieure inférieure 36 est définie par l'ensemble des écarts inférieurs à l'opposé du double de l'écart type - 2ET.

La symétrie des bandes d'analyse vise à alléger les calculs du traitement des écarts, et participe à une vitesse de traitement élevée de l'invention.

En effet, si le traitement d'un écart E(N) aboutit à une consigne C(P), alors le traitement de l'écart opposé, noté - E(N) aboutit à une consigne opposée, notée - C(P).

Ceci permet donc de traiter l'ensemble des écarts en ne considérant que leur valeur absolue.

Dans des réalisations, les bandes d'analyse sont définies différemment, par exemple les bandes d'analyse ne sont pas symétriques par rapport à l'écart nul.

Dans d'autres réalisations, seules deux bandes d'analyse sont prévues, par exemple ces bandes d'analyse sont définies d'une part seulement de l'écart nul E0 et/ou du modèle théorique 6.

Un exemple de mise en oeuvre de l'invention est maintenant décrit.

Soit donc E(N) un écart calculé à l'instant N.

Si l'écart E(N) est dans la bande d'analyse extérieure supérieure 33 ou inférieure 36, alors la valeur absolue de la consigne C(P) correspond à une distance d'élévation de 10 mm.

Si l'écart E(N) est dans la bande d'analyse médiane respectivement supérieure 32 ou inférieure 35, alors les moyens d'asservissement 27 calculent une quantité D, définie ici par la différence entre la valeur absolue de l'écart E(N) et la valeur absolue de la borne respectivement inférieure ou supérieure, ici ET, de cette bande d'analyse.

De cette différence est déduite une consigne d'asservissement C(P).

Pour que la convergence de la nappe 7 vers le modèle théorique 6 soit limitée, la valeur absolue de la consigne C(P) est au maximum égale à une valeur d'action médiane maximale C1, correspondant par exemple à une distance d'élévation de 10 mm.

De même, pour que cette convergence soit suffisamment rapide, la valeur absolue de la consigne C(P) est au minimum égale à une valeur d'action médiane minimale C2, correspondant par exemple à une distance d'élévation de 4 mm.

Les moyens d'asservissement 27 comparent la quantité D aux valeurs C1 et C2.

Si la quantité D est supérieure à la valeur d'action médiane maximale C1, alors la valeur absolue de la consigne C(P) est choisie égale à cette valeur C1.

Si la quantité D est inférieure à la valeur d'action médiane minimale C2, alors la valeur absolue de la consigne C(P) est choisie égale à cette valeur C2.

Tandis que si la quantité D est comprise entre les valeurs C1 et C2, alors la valeur absolue de la consigne C(P) est choisie égale à la quantité D.

Dans le cas où l'écart E(N) est dans la bande d'analyse centrale supérieure 31 ou inférieure 34, alors les moyens d'asservissement 27 calculent une différence D' entre les valeurs absolues respectives de l'écart E(N) et de l'écart précédent E(N-1/F), où (N-1/F) est l'instant de calcul précédant immédiatement l'instant N.

Ici, puisque la fréquence F est égale à 1 Hz, la notation (N-1) est équivalente à la notation (N-1/F).

Si la différence D' est négative ou nulle, alors la consigne C(P) est choisie nulle.

Si la différence D' est positive, alors le calcul de la consigne C(P) suit des règles équivalentes à celles suivies pour les bandes d'analyse médianes supérieure 32 et inférieure 35, appliquées ici à une quantité Q' égale à une fraction, par exemple le tiers, de la différence D'.

Les moyens d'asservissement 27 comparent donc cette quantité Q' à deux autres valeurs C3 et C4, correspondant ici respectivement à des distances d'élévation de 4 mm et 1 mm.

Si la quantité Q' est supérieure à la valeur C3, dite d'action centrale maximale, alors la valeur absolue de la consigne C(P) est choisie égale à cette valeur C3.

Si la quantité Q' est inférieure à la valeur C4, dite d'action centrale minimale, alors la valeur absolue de la consigne C(P) est choisie égale à cette valeur C4.

Si la quantité Q' est comprise entre les valeurs C3 et C4, alors la valeur absolue de la consigne C(P) est choisie égale à cette quantité Q'.

Dans une réalisation, est prévue dans le traitement des écarts une courbe de régression 37, illustrée sur la figure 10.

Cette courbe de régression, ici une droite, définit l'évolution en moyenne, des écarts au cours d'un intervalle de temps prédéterminé.

Ces écarts sont, dans la réalisation illustrée à la figure 10, les cinquante écarts calculés immédiatement avant l'écart E(N), ce dernier étant calculé à l'instant N.

La courbe de régression, qui dépend donc de l'instant N, permet par extrapolation à cet instant, de calculer un écart dit de régression E'(N).

Un écart corrigé E''(N) est alors calculé à partir de l'écart E(N) et de l'écart extrapolé E'(N) correspondant, cet écart corrigé étant égal à une moyenne pondérée de ces derniers.

De même, un écart corrigé précédent E''(N-1) est calculé comme étant une moyenne pondérée de l'écart précédent E(N-1) et d'un écart E'(N-1) extrapolé précédent correspondant.

Dans le calcul de la consigne d'asservissement, les écarts E(N) et E(N-1) sont alors remplacés respectivement par les écarts corrigés E''(N) et E''(N-1).

Cela permet notamment de pondérer une évolution trop brutale des écarts au cours du temps en agissant sur la valeur de la consigne d'asservissement C(P).

Chaque consigne C(P) ainsi calculée est transmise à l'automate 20 par les moyens d'asservissement 27, par exemple sous la forme d'un signal numérique.

L'automate 20 le convertit alors en signal analogique, qu'il transmet aux distributeurs d'élévation 21, 22 de l'outil 4.

Les distributeurs d'élévation 21, 22 modifient la position suivant la direction Z de l'outil 4 en fonction de la consigne qui leur est transmise.

Par exemple, lorsque l'écart calculé en un point P pour l'extrémité gauche de l'outil 4 est positif, ce qui indique que l'outil 4 est alors situé au-dessus de sa position théorique, le distributeur d'élévation gauche 21 reçoit une consigne C(P) de signe positif telle que l'outil 4 est déplacé vers le bas d'une distance égale à la valeur de C(P).

A l'inverse, lorsque cet écart est négatif, le distributeur 21 reçoit une consigne C(P) de signe négatif telle que l'outil 4 est déplacé vers le haut d'une distance égale à la valeur absolue de C(P).

La dimension transversale ou largeur de la nappe 7 à réaliser est souvent supérieure à la largeur de l'outil 4.

La réalisation de la nappe ne pouvant s'opérer en une seule passe, l'engin procède donc en plusieurs passes successives.

A chaque passe correspond une ligne auxiliaire de guidage 38, qui matérialise pour l'engin 2 la trajectoire à suivre, par exemple une droite, une spirale ou un arc de cercle.

Le distributeur de direction 23 permet notamment de contrôler transversalement la trajectoire longitudinale de l'engin 2 lors de la réalisation de la nappe 7.

On tend ainsi à mettre en coïncidence cette trajectoire avec une ligne de guidage.

La trajectoire de l'engin 2 est ainsi analysée par les moyens d'asservissement 27 suivant des paramètres fournis par le noyau de localisation 26, notamment le déport au point P et l'angle ou gisement B entre une ligne orthogonale à l'extrémité avant de l'outil 4, et la tangente à la ligne de guidage 38 dans un plan localement tangent à la nappe 7.

En fonction de ces paramètres et du sens d'avancement de l'engin 2 le long de la courbe directrice 28, les moyens d'asservissement 27 calculent l'angle de rotation des roues directrices, pour que le déport et le gisement B convergent vers des valeurs sensiblement nulles.

Lorsque ces déport et gisement sont nuls, on considère que la trajectoire est localement en coïncidence, comme souhaité, avec la ligne de guidage.

Similairement au traitement d'écarts d'élévation, en fonction de ce gisement B, les moyens d'asservissement 27 calculent une consigne transversale qui est transmise au distributeur de direction 23 par l'automate 20.

On comprend maintenant que l'invention permet d'une part que l'outil 4 réalise une nappe 7 qui converge vers le modèle théorique 6, à la fois verticalement (en élévation) et horizontalement (transversalement).

D'autre part, l'invention permet, outre de réaliser des nappes 7 dont le dévers est constant, de réaliser des nappes 7 dont le dévers présente des discontinuités (figures 6, 7 et 8).

Ces figures représentent respectivement des étapes ou passes successives de réalisation d'une telle nappe à discontinuité.

Sur ces figures, l'outil 4 réalise une nappe 7 dite brisée transversalement, qui comprend au moins deux portions 39, 40 de dévers différents, séparées par une cassure 41.

La figure 6 représente une étape dite initiale de réalisation de la nappe 7.

Lors de la réalisation d'une nappe 7, l'outil 4 peut se retrouver en porte-à-faux avec une partie active en contact transversalement à gauche contre une portion gauche, du corps 5 et/ou de la nappe 7, tandis qu'une partie inactive de l'outil 4 n'est pas en contact avec la nappe 7.

Dans ce cas, un récepteur 10, 10A, 10B a une extrémité en contact avec la nappe 7, ici le récepteur 10A du mât gauche 8A, est dit prioritaire par rapport à l'autre récepteur : on dit que le dispositif 24 fonctionne en mode priorité à gauche de l'outil.

Il va de soi que dans des réalisations, la portion correspondant à celle désignée ici comme portion droite est par exemple une partie brute faisant partie du corps 5 et non de la nappe 7.

Suivant ce mode priorité à gauche, le calcul de localisation de l'extrémité gauche de l'outil 4 est basé sur sa position mesurée, tandis celui de l'extrémité droite prend en compte sa position mesurée par rapport à une portion imaginaire droite 42 confondue avec l'arête utile inférieure de l'outil 4, située transversalement dans le prolongement de la portion gauche, et de même dévers que cette dernière.

La figure 7 représente une étape dite intermédiaire de réalisation de la nappe 7.

La partie de l'outil 4 qui était en contact avec la portion gauche est ici au moins partiellement au-dessus de cette portion, tandis que la partie de l'outil 4 initialement inactive est au moins partiellement en contact maintenant avec la portion.

Donc, l'outil 4 est maintenant en porte-à-faux avec la portion droite, tandis qu'une partie au moins de l'outil 4 n'est pas en contact avec la nappe 7.

Dans ce cas, le récepteur relatif à l'extrémité en contact avec la nappe 7, ici le récepteur droit 10B, est dit prioritaire par rapport à l'autre récepteur : on dit que le dispositif 24 fonctionne en mode priorité à droite de l'outil.

Dans ce mode de fonctionnement, le calcul de localisation de l'extrémité droite est basé sur sa position mesurée, tandis celui de l'extrémité gauche est basé sur sa position sur une portion imaginaire gauche 43 située dans le prolongement de la portion droite, et de même dévers.

Sur la figure 8, l'outil 4 réalise sur la nappe 7 une portion de liaison 44 entre une portion gauche et une portion droite de dévers différents.

Ici les deux extrémités de l'outil 4 sont en contact avec la nappe 7 : aucun récepteur n'est prioritaire par rapport à l'autre. On dit que le dispositif 24 fonctionne en mode sans priorité.

Les calculs de localisation pour les extrémités droite et gauche de l'outil 4 sont alors basés sur leurs positions mesurées sur la nappe 7.

Dans l'exemple illustré, le choix des priorités est confié au chauffeur 3 de l'engin 2 (figure 1).

Une réalisation prévoit d'automatiser ce choix en équipant l'outil 4 de capteurs de proximité de l'enveloppe 5 par rapport à chacune de ses extrémités, de sorte que si une distance prédéterminée est relevée par un capteur par exemple droit, la priorité est donnée à gauche.

Un seul engin 2 peut réaliser une nappe 7 brisée transversalement en réalisant une portion gauche, puis au moins une portion droite, par exemple une pluralité d'autres portions de dévers différents.

On prévoit cependant, dans des réalisations, plusieurs engins 2 oeuvrant les uns à la suite des autres et réalisant chacun au moins une portion d'une même nappe 7 brisée.

Dans d'autres réalisations, non illustrées, un même engin ou une pluralité d'engins différents peuvent réaliser plusieurs passes successives en élévation en suivant la même ligne auxiliaire de guidage.

En outre, l'invention permet de procéder au rétablissement d'une nappe 7 existante.

Il est ainsi possible notamment de changer le revêtement d'un profil routier, ou de rajouter une couche supplémentaire de revêtement neuf par-dessus un revêtement usagé.

Il est alors prévu d'effectuer une passe de mesure de la nappe 7 existante pour la mémorisation des courbes géométriques 30 dans le module de numérisation 19.

L'invention permet de réaliser une nappe 7 telle que le dévers de cette nappe est variable dans un plan d'élévation transversale, le long de la courbe directrice 28.

De telles nappes 7 sont courantes par exemple sur des chantiers 1 linéaires tels que bretelles d'accès routier routes, ou voies de chemin de fer.

Les variations de dévers le long de la courbe directrice 28 sont saisies dans le module de numérisation 19.

Le calculateur 18 effectue notamment une interpolation linéaire entre les différents profils en travers du modèle théorique 6 successives ou contiguës.

Cette interpolation est effectuée en temps réel.

Cela évite, comme évoqué plus haut, de devoir mémoriser et traiter un modèle théorique 6 complexe, ce qui nécessite des moyens informatiques lourds et ralentit leur fonctionnement.

Les distributeurs d'élévation et de direction 21, 22, 23 sont asservis et agissent sur l'outil 4 en conséquence.

L'invention permet de parcourir un modèle théorique 6 le long de la courbe directrice 28, librement dans un sens ou dans le sens inverse.

Ainsi, dans un mode de réalisation, le dispositif 24 comporte une unité d'analyse de sens qui reconnaît automatiquement le sens d'avancement de l'engin 2 suivant la courbe directrice 28.

Cette reconnaissance se fait par exemple à l'aide d'un ou plusieurs capteurs situés sur le système de transmission de l'engin 2, tel que son moteur, sa transmission, ses roues ou ses moyeux.

Cette reconnaissance élargit notamment le champ d'application de l'invention.

Plus généralement, le fait de pouvoir parcourir le modèle 6 dans un sens ou dans l'autre facilite par exemple la réalisation d'une nappe 7 brisée (figures 6 à 8).

En effet, un même engin 2 peut alors réaliser lors d'une passe initiale une portion initiale, par exemple gauche dans un sens donné le long d'une ligne auxiliaire de guidage initiale, puis lors d'au moins une passe ultérieure, une portion ultérieure, par exemple droite, dans le même sens ou dans un autre sens le long d'une ligne auxiliaire de guidage ultérieure, et ainsi de suite si nécessaire.

Par ailleurs, des erreurs ont été constatées lors de la réalisation d'une nappe 7, telles que cette nappe 7 risquerait de ne pas correspondre avec précision localement au modèle 6.

Selon l'invention, le calculateur 18 peut automatiquement identifier certaines de ces erreurs, par exemple une absence de mesure de position par au moins l'un des récepteurs 10, 10A, 10B, une défaillance de communication comme une trame incomplète, une erreur de numérisation du modèle théorique 6 dans le module 19, des erreurs de transmission entre le module 17 et le calculateur 18, une erreur de calcul dans les moyens d'asservissement 27 ou encore une erreur de positionnement de l'engin 2 sur la nappe 7.

Lorsqu'une telle erreur est identifiée, le dispositif 24 est basculé d'un mode automatique en mode manuel, sous l'effet du calculateur 18.

En mode automatique, les mouvements de l'engin 2 et de l'outil 4 notamment sont entièrement contrôlés par le dispositif de commande 24.

Tandis qu'en mode manuel, ces mouvements sont contrôlés par le chauffeur 3 de l'engin 2.

Dans un mode de réalisation, une manette 45 de direction du chauffeur 3 est prioritaire sur le mode automatique : un simple mouvement de cette manette suffit à faire passer le dispositif 24 en mode manuel et à donner au chauffeur 3 le contrôle entier de l'engin 2.

Tandis que lorsque le chauffeur 3 relâche la manette 45, le dispositif 24 repasse immédiatement en mode automatique.

Dans une réalisation, le basculement du mode automatique au mode manuel est aussi effectué par activation d'un mode d'arrêt d'urgence, par exemple par pression sur un bouton d'arrêt d'urgence.

Notons en outre que dans un mode de réalisation, l'engin 2 est pourvu, dans une cabine 39 par exemple, de moyens de visualisation tels qu'au moins un écran cathodique ou à cristaux liquides ; par exemple trois écrans sont disposés en vis-à-vis du chauffeur 3.

Ces écrans sont par exemple un écran d'accueil et de paramétrage 47, un écran de travail 48 et un écran d'informations géométriques 49.

Dans une réalisation, les moyens de visualisation sont tactiles.

L'écran d'accueil et de paramétrage 47 permet au chauffeur 3 notamment d'initialiser le dispositif 24, par exemple lors de sa mise en marche ou après un problème de transmission relatif à un récepteur 10, 10A, 10B, 12.

Quant à l'écran de travail 48, il permet au chauffeur 3 notamment de suivre l'évolution de l'outil 4 dans ses positions successives mesurées par rapport à ses positions théoriques sur le modèle 6, et donc de visualiser les consignes transmises à l'automate 20 par le calculateur 18 et des messages d'erreur.

Enfin, l'écran d'informations géométriques 49 indique notamment au chauffeur 3 la progression de l'engin 2 sur le modèle 6 en vue d'axe en plan, en vue de profil en long, ainsi qu'une liste de paramètres telle que celle définie plus haut, pour chaque extrémité de l'outil 4.

**Revendications**

**1.** Procédé de réalisation d'une nappe (7) de projet routier ayant un profil topographique prédéterminé, à partir d'un corps (5) existant délimité par une enveloppe tridimensionnelle, tel que terrain ou construction, à l'aide d'un outil (4) monté sur un engin (2), par exemple de terrassement pour chantier ou analogues ; cet engin (2) coopérant avec un système de positionnement global par satellite de type bi - fréquence, différentiel, cinématique et en temps réel tel que GPS ; l'engin (2) possédant au moins un récepteur de positionnement global (10 ; 10A ; 10B), par exemple sur son outil (4), afin d'être déplacé selon un modèle théorique (6) de la nappe (7) ;

**caractérisé en ce qu'**il comporte les étapes prévoyant de :

- mémoriser des courbes géométriques (28, 30) fixées propres à la nappe, dont au moins une courbe directrice (28) sensiblement longitudinale et au moins un profil en travers (29) ;
- mesurer au moins à un instant (N), la position en élévation (z(P)), longitudinale (x(P)) et transversale (y(P)) de l'outil, à l'aide du récepteur (10 ; 10A ; 10B) lors du déplacement de l'outil, par exemple suivant une fréquence (F) prédéterminée ;

- associer à cette position mesurée un emplacement le long de la courbe directrice (28) ;
- calculer localement le modèle (6) en faisant correspondre à cet emplacement un profil en travers (29) de la nappe (7) ;
- activer en mémoire un écart type (ET) significatif d'une incertitude caractéristique du système de positionnement global, éventuellement après sa détermination lors d'une phase d'étalonnage du récepteur (10 ; 10A ; 10B) ;
- comparer lors du déplacement de l'outil (4) par exemple suivant la fréquence (F) prédéterminée, une position d'élévation (z(P)) mesurée de l'outil avec une altitude théorique ($z_{TH}(P)$) définie à partir du modèle (6) ;
- déduire de cette comparaison un écart (E(N)) d'élévation à l'instant (N), tel que cet écart est dit écart nul (E0) lorsque la position d'élévation (z(P)) mesurée est sensiblement confondue avec l'altitude théorique ($z_{TH}(P)$) ;
- définir d'une part au moins de l'écart nul (E0), au moins deux bandes d'analyse, et par exemple deux bandes centrales respectivement supérieure (31) et inférieure (34), deux bandes médianes respectivement supérieure (32) et inférieure (35), et deux bandes extérieures respectivement supérieure (33) et inférieure (36), ces bandes étant par exemple symétriques deux à deux, des bornes inférieures et/ou supérieures de ces bandes d'analyse étant proportionnelles à l'écart type (ET) ;
- identifier une bande d'analyse active (31, 36) à laquelle appartient cet écart (E(N)) d'élévation ;
- calculer en fonction de l'écart (E(N)) et de la bande d'analyse active, une consigne (C(P)) d'asservissement d'élévation, dont la valeur est plafonnée en fonction de la bande d'analyse active identifiée ; et
- commander la position d'élévation de l'outil (4) en fonction de la consigne (C(P)) calculée, de sorte que cet outil est soit momentanément laissé en position, soit rapproché de manière limitée du modèle (6) d'une distance d'élévation sensiblement proportionnelle à la valeur absolue de la consigne (C(P)).

2. Procédé de réalisation selon la revendication 1, **caractérisé en ce que** le modèle théorique (6) de la nappe (7) est calculé localement à partir notamment d'au moins :

- la courbe directrice (28), définie mathématiquement, notamment par une ligne dite axe en plan et par un profil en long, définis eux-mêmes par au moins une fonction paramétrée continue et dérivable, et comportant au moins une partie de courbe géométrique (30), et par exemple une succession de telles parties, chacune étant définie mathématiquement par une fonction paramétrée continue, telle que droite, arc de cercle, parabole, clothoïde ou analogues ; et

- un profil en travers (29), défini mathématiquement par une fonction paramétrée continue, par exemple chaque profil en travers est une succession de segments de droites bouts à bouts.

3. Procédé de réalisation selon l'une des revendications 1 ou 2, **caractérisé en ce qu'**il est destiné au rétablissement d'une nappe (7) existante, et comportant lors de la mémorisation des courbes géométriques (30), au moins une phase prévoyant notamment une passe de mesure de la nappe existante, par exemple avec un engin (2) similaire à celui prévu pour réaliser le rétablissement.

4. Procédé de réalisation selon l'une des revendications 1 à 3, **caractérisé en ce qu'**est prévue une étape de contrôle latéral ou directionnel de la trajectoire longitudinale de l'engin (2) et/ou de l'outil (4) lors de la réalisation de la nappe (7), cette étape comportant les phases prévoyant de :

- définir une ligne auxiliaire de guidage (38) que doit suivre l'engin (2) lors d'une passe donnée de la réalisation, cette ligne de guidage étant par exemple à distance sensiblement constante de la courbe directrice (28) ;
- analyser la position latérale mesurée en plan de l'outil (4) en fonction de mesures fournies par le récepteur (10, 10A, 10B) ; et
- en fonction de paramètres obtenus par cette analyse, calculer une commande d'asservissement latéral de l'engin (2) apte à faire coïncider une trajectoire en plan de l'engin (2) avec la ligne auxiliaire de guidage (38).

5. Procédé de réalisation selon l'une des revendications 1 à 4, **caractérisé en ce que** d'au moins une part de l'écart nul (E0), trois bandes d'analyse sont prévues, à savoir :

- une première bande d'analyse à proximité de l'écart nul (E0), dite centrale (31) et définie par un ensemble d'écarts ;
- une deuxième bande d'analyse, dite médiane (32) et définie par des écarts supérieurs à ceux de la bande centrale ; et
- une troisième bande d'analyse, plus éloignée de l'écart nul (E0) que les bandes centrale et médiane, dite extérieure (33) et définie par un ensemble d'écarts supérieurs à ceux de la bande médiane ;

éventuellement d'autre part de l'écart nul (E0), étant prévues d'autres bandes d'analyse (34, 35, 36), par exemple symétriques aux bandes centrale, médiane et extérieure par rapport à l'écart nul (E0).

6. Procédé de réalisation selon l'une des revendications 1 à 5, **caractérisé en ce que** les bandes d'analyse sont symétriques, par exemple supérieures et inférieures par rapport à l'écart nul (E0), et **en ce que** le traitement de l'ensemble des écarts considère seulement leur valeur absolue, la consigne (C(P)) correspondant à un écart (E(N)) de signe négatif étant égale à l'opposé de la consigne issue du traitement de la valeur absolue de cet écart.

7. Procédé de réalisation selon l'une des revendications 1 à 6, **caractérisé en ce que** le modèle théorique (6) est à même d'être parcouru par l'engin (2) le long de la courbe directrice (28) et/ou le long d'une ligne auxiliaire de guidage (38), librement dans un sens ou dans un autre sens, par exemple opposé.

8. Procédé de réalisation selon la revendication 7, **caractérisé en ce qu'**il comporte une étape de reconnaissance automatique du sens d'avancement de l'engin (2) le long de la courbe directrice (28) et/ou de la ligne auxiliaire de guidage (38).

9. Procédé de réalisation selon l'une des revendications 1 à 8, **caractérisé en ce que** sont prévues au moins deux passes successives, en élévation, une ligne auxiliaire de guidage initiale, relative à une passe initiale, étant alors translatée d'une valeur prédéterminée pour définir une ligne auxiliaire de guidage ultérieure, relative à une passe suivante.

10. Procédé de réalisation selon l'une des revendications 1 à 9, **caractérisé :**

    - **en ce qu'**on mesure à l'instant (N) les positions (x(P), y(P), z(P)) de l'outil en un point (P) de la nappe (7), à l'aide du récepteur (10 ; 10A ; 10B) lors du déplacement de l'outil suivant une fréquence (F) prédéterminée ;
    - **en ce qu'**on compare, lors du déplacement de l'outil (4), suivant une fréquence (F) prédéterminée, la position d'élévation (z(P)) mesurée de l'outil avec l'altitude théorique (zTH(P)) définie à partir du modèle (6) ;
    - et **en ce que** la fréquence (F) de mesure, traitement et calcul, est définie, entre l'instant (N) et un instant suivant (N+1) de mesure ultérieure, par une horloge du système de positionnement global, et est par exemple de l'ordre de 1 Hertz.

11. Procédé de réalisation selon l'une des revendications 5 à 10, **caractérisé en ce que** si l'écart (E(N)) est déterminé dans une bande extérieure d'analyse (33, 36), alors la consigne d'asservissement (C(P)) est de valeur constante, par exemple sa valeur absolue correspond à une distance de déplacement de l'outil de l'ordre de 10 millimètres.

12. Procédé de réalisation selon l'une des revendications 5 à 10, **caractérisé en ce que** si l'écart (E(N)) est déterminé dans une bande médiane d'analyse (32, 35), alors est calculée une différence dite médiane ou quantité (D) définie par une différence entre cet écart (E(N)) et une borne respective de cette bande (32, 35) la plus proche de l'écart nul (E0), une consigne d'asservissement (C(P)) étant déduite de cette quantité (D).

13. Procédé de réalisation selon la revendication 12, **caractérisé en ce que** si la valeur absolue de la quantité (D) est supérieure à une valeur d'action médiane maximale (C1), alors la valeur absolue de la consigne (C(P)) est déterminée comme étant sensiblement égale à cette valeur (C1), par exemple cette valeur correspond à une distance de déplacement de l'outil (4) de l'ordre de 10 millimètres.

14. Procédé de réalisation selon la revendication 12, **caractérisé en ce que** si valeur absolue de la quantité (D) est inférieure à une valeur d'action médiane minimale (C2), alors la valeur absolue de la consigne (C(P)) est déterminée comme étant sensiblement égale à cette valeur (C2), par exemple cette valeur correspond à une distance de déplacement de l'outil (4) de l'ordre de 4 millimètres.

15. Procédé de réalisation selon la revendication 12, **caractérisé en ce que** si la valeur absolue de la quantité (D) est comprise entre des valeurs médianes maximale (C1) et minimale (C2), alors la valeur absolue de la consigne (C(P)) est déterminée comme étant sensiblement égale à la valeur absolue de la quantité (D).

16. Procédé de réalisation selon l'une des revendications 5 à 10, **caractérisé :**

    - **en ce qu'**on mesure à l'instant (N) les positions (x(P), y(P), z(P)) de l'outil en un point (P) de la nappe (7), à l'aide du récepteur (10 ; 10A ; 10B) lors du déplacement de l'outil suivant une fréquence (F) prédéterminée ;
    - **en ce qu'**on compare, lors du déplacement de l'outil (4), suivant une fréquence (F) prédéterminée, la position d'élévation (z(P)) mesurée de l'outil avec l'altitude théorique (zTH(P)) définie à partir du modèle (6) ;
    - et **en ce que** si l'écart (E(N)) est déterminé comme étant dans une bande centrale d'analyse (31, 34), par exemple supérieure ou inférieure, alors est effectuée une étape de calcul d'une différence dite centrale (D') entre la valeur absolue de cet écart et la valeur absolue d'un écart à un instant précédent (N-1) de calcul avant l'instant (N) selon la valeur de la fréquence de traitement (F).

**17.** Procédé de réalisation selon la revendication 16, **caractérisé en ce que** si la différence (D') est négative ou nulle, alors la consigne (C(P)) est choisie sensiblement nulle, et par exemple la distance d'élévation de rapprochement de l'outil (4) est nulle.

**18.** Procédé de réalisation selon la revendication 16, **caractérisé en ce que** si la différence (D') est positive, alors est calculée une quantité (Q') dite centrale, égale à une fraction de la différence (D'), par exemple de l'ordre d'un tiers de cette différence.

**19.** Procédé de réalisation selon la revendication 18, **caractérisé en ce que** si la quantité centrale (Q') est supérieure à une valeur centrale maximale (C3), alors la valeur absolue de la consigne (C(P)) est déterminée comme étant sensiblement égale à cette valeur (C3), par exemple cette valeur correspand à une distance de déplacement de l'outil (4) de l'ordre de 4 millimètres.

**20.** Procédé de réalisation selon la revendication 18, **caractérisé en ce que** si la quantité centrale (Q'), est inférieure à une valeur d'action centrale minimale (C4), alors la valeur absolue de la consigne (C(P)) est déterminée comme étant sensiblement égale à cette valeur (C4), par exemple cette valeur correspond à une distance de déplacement de l'outil (4) de l'ordre de 1 millimètre.

**21.** Procédé de réalisation selon la revendication 18, **caractérisé en ce que** si la quantité centrale (Q'), est comprise entre les valeurs d'action centrales minimale (C4) et maximale (C3), alors la valeur absolue de la consigne (C(P)) est déterminée comme étant sensiblement égale à cette quantité centrale (Q').

**22.** Procédé de réalisation selon l'une des revendications 1 à 21, **caractérisé en ce qu'**est calculée une courbe de régression (37), par exemple droite, qui définit l'évolution moyenne des écarts déduits au cours d'un intervalle de temps prédéterminé, par exemple entre des temps d'une mesure antérieure (N-50) et d'une mesure précédente (N-1), un écart de régression (E'(N)) étant extrapolé à l'instant (N) à partir de cette courbe de régression (37), et la consigne (C(P)) correspondant à l'écart (E(N)) étant alors corrigée en fonction de la différence entre l'écart extrapolé (E'(N)) et l'écart (E(N)).

**23.** Procédé de réalisation selon la revendication 22, **caractérisé en ce que** la correction appliquée à la consigne (C(P)) prévoit de remplacer, dans le calcul de cette consigne, d'une part la valeur de l'écart (E(N)) par la valeur d'un écart corrigé (E''(N)), d'autre part la valeur de l'écart précédent (E(N-1)) par la valeur d'un écart corrigé précédent (E''(N-1)), les valeurs de l'écart corrigé (E''(N)) et de l'écart corrigé précédent (E''(N-1)) étant égales respectivement à une moyenne pondérée de la valeur de l'écart (E(N)) et de l'écart extrapolé correspondant (E'(N)), et à une moyenne pondérée de la valeur de l'écart précédent (E(N-1)) et d'un écart extrapolé précédent (E'(N-1)) correspondant.

**24.** Procédé de réalisation selon l'une des revendications 1 à 23, **caractérisé en ce que** des signaux ou trames reçus des récepteurs (10, 10A, 10B) pour traitement, subissent des opérations de décodage et de filtrage, ces opérations permettant de transformer les trames en signaux numériques aptes à être traités, ainsi que d'éliminer toutes les mesures dont l'écart par rapport à une mesure précédente est supérieur à une valeur importante prédéterminée, par exemple de l'ordre de 100 mm.

**25.** Procédé selon l'une des revendications 1 à 24, **caractérisé en ce qu'**une étape de numérisation, prévue par un module de numérisation (19) comporte notamment les phases de :

- numérisation de données relatives au modèle théorique (6) par exemple issu d'une conception assistée par ordinateur ;
- simulation du déplacement de l'engin (2) sur le modèle (6), pour vérifier la cohérence des données ;
- visualisation de paramètres du modèle théorique (6) ; et
- création de fichiers informatiques aptes à être traités par un calculateur (18) de pilotage du procédé.

**26.** Procédé de réalisation selon l'une des revendications 1 à 25, **caractérisé en ce que** le modèle théorique (6) est notamment défini par la courbe directrice (28) et au moins un profil en travers, une étape étant prévue de calcul (18), par interpolation linéaire entre différents paramètres de profil en travers du modèle théorique (6), le long de cette courbe directrice (28).

**27.** Procédé de réalisation selon l'une des revendications 1 à 26, **caractérisé en ce qu'**est prévue une étape automatique d'identification d'erreur dans la convergence limitée et/ou le traitement, telle qu'au moins une absence de mesure de position par le récepteur (10, 10A, 10B), une défaillance de communication, une erreur de numérisation du modèle théorique (6), une erreur de transmission de l'information de positionnement global vers un calculateur (18), une erreur de calcul d'asservissement, ou une erreur de positionnement propre à l'engin (2).

28. Procédé de réalisation selon l'une des revendications 1 à 27, **caractérisé en ce qu'**il prévoit l'utilisation d'au moins un deuxième récepteur (10 ; 10A ; 10B) et/ou d'au moins un capteur d'attitude, par exemple un inclinomètre ou capteur de dévers.

29. Procédé de réalisation selon l'une des revendications 1 à 28, **caractérisé en ce qu'**il prévoit trois modes de fonctionnement distincts, un mode dit de priorité à la gauche de l'outil (4), un mode dit de priorité à la droite de l'outil (4), et un mode sans priorité, notamment pour la réalisation de profils en travers (29) brisés ou analogues, de la nappe (7).

30. Dispositif (24) de commande et d'asservissement destiné à la réalisation selon un modèle théorique (6) d'une nappe (7) de projet routier ayant un profil topographique prédéterminé, à partir d'un corps (5) délimité par une enveloppe tridimensionnelle, tel que terrain ou contruction, à l'aide d'un outil (4) monté sur un engin (2) coopérant avec un système de positionnement global par satellite, le dit dispositif (24) étant **caractérisé en ce qu'**il comprend notamment au moins :

   - - un module de positionnement (17) comprenant au moins un récepteur de positionnement global (10) destiné à mesurer au moins à un instant (N) la position $(x(P), y(P), z(P))$ de l'outil (4) ;
   - - un module de numérisation (19) apte à mémoriser des courbes géométriques (28, 30) fixées propres à la nappe et à associer à la position $(x(P), y(P), z(P))$ mesurée de l'outil (4) un emplacement le long de la courbe directrice (28) ;
   - - un calculateur (18) apte à traiter des informations provenant d'une part du module de positionnement (17) et d'autre part d'une partie utile seulement du modèle (6) théorique, accessible par exemple à l'aide d'un fichier créé par le module de numérisation (19), afin de pouvoir comparer une position d'élévation $(z(P))$ mesurée de l'outil avec une altitude théorique $(z_{TH}(P))$ définie à partir du modèle (6), déduire un écart $(E(N))$ d'élévation à l'instant (N), cet écart étant dit écart nul (E0) lorsque la position d'élévation $(z(P))$ mesurée est sensiblement confondue avec l'altitude théorique $(z_{TH}(P))$, définir d'une part au moins de l'écart nul (E0), au moins deux bandes d'analyse, identifier une bande d'analyse active à laquelle appartient l'écart d'élévation $(E(N))$, et calculer, en fonction de l'écart $(E(N))$ et de la bande d'analyse active une consigne $(C(P))$ d'asservissement d'élévation ;
   - - un automate (20), par exemple programmable, pouvant être commandé par le calculateur (18) ; et
   - - des distributeurs d'élévation (21, 22) respectivement droit et gauche et de direction (23) de l'outil, pouvant être commandés par l'automate (20) et destinés à agir sur la position d'élévation de l'outil (4) en fonction de la consigne $(C(P))$ d'asservissement.

31. Dispositif (24) selon la revendication 30, **caractérisé en ce que** le calculateur (18) comprend notamment au moins trois sous-ensembles, à savoir :

   - un noyau de décodage et de filtrage (25) ;
   - un noyau de localisation (26) ; et
   - des moyens d'asservissement (27) reliés aux distributeurs d'élévation (21, 22) et de direction (23) de l'outil (4) par l'intermédiaire de l'automate (20).

32. Dispositif (24) selon la revendication 31, **caractérisé en ce qu'**un noyau de décodage et de filtrage (25) ainsi qu'un noyau de localisation (26) comportent des programmes informatiques de calcul numérique, des applications issues de logiciels de calcul numérique ou analogues.

33. Dispositif (24) selon l'une des revendications 30 à 32, **caractérisé en ce qu'**il comprend des moyens de transmission au calculateur (18) à chaque instant (N) d'informations sous forme de messages codés, notamment relatives à une position longitudinale (x), transversale (y) et d'élévation (z) de chaque récepteur mobile (10, 10A, 10B).

34. Dispositif (24) selon l'une des revendications 30 à 33, **caractérisé en ce qu'**il comporte des moyens de sécurité, aptes à détecter ou identifier un arrêt de fonctionnement des récepteurs mobiles (10, 10A, 10B) et/ou aptes à faire basculer ce dispositif (24) d'un mode de fonctionnement automatique à un mode de fonctionnement manuel suivant lequel un chauffeur (3) de l'engin (2) contrôle entièrement ce dernier.

35. Dispositif (24) selon l'une des revendications 30 à 34, **caractérisé en ce qu'**il comprend des moyens de reconnaissance automatique du sens d'avancement de l'engin (2) le long de la courbe directrice (28) et/ou d'une ligne auxiliaire de guidage (38) du modèle théorique (6).

36. Engin (2) apte à mettre en oeuvre le procédé selon l'une des revendications 1 à 29 et comportant au moins un dispositif (24) selon l'une des revendications 30 à 35, tel que niveleuse de terrassement, benne verseuse de remblai, machine de coulée continue de béton, grignoteuse de structure existante, chasse-neige ou analogues, le dit engin (2) étant apte à coopérer avec un système de positionement global par satellite **caractérisé en ce qu'**il comporte au moins un outil (4) avec au moins un récepteur de positionnement global (10 ; 10A ; 10B), par exemple deux récepteurs, montés sur des mâts respectifs (8 ; 8A ; 8B) à proximité des extrémités transversales de l'outil (4).

37. Engin (2) selon la revendication 36, **caractérisé en ce qu'**il comporte au moins un outil (4) avec au moins un récepteur de positionnement global (10 ; 10A ; 10B) par exemple à proximité des extrémités transversales de l'outil (4) et au moins un capteur d'attitude.

38. Engin (2) selon la revendication 36 ou 37, **caractérisé en ce qu'**il est pourvu par exemple dans une cabine (46) d'habitacle de moyens de visualisation (47, 48, 49) tels qu'au moins un écran, par exemple à cristaux liquides ou analogues, la dite cabine (46) d'habitacle étant apte à recevoir un chauffeur du dit engin (2).

39. Engin (2) selon la revendication 38, **caractérisé en ce que** les moyens de visualisation comportent au moins un écran d'accueil et de paramétrage (47), un écran de travail (48) et un écran d'informations géométriques (49), l'écran d'accueil et de paramétrage (47) étant par exemple tactile pour permettre à un chauffeur (3) du véhicule d'initialiser un dispositif de commande et d'asservissement (24).

40. Engin (2) selon l'une des revendications 36 à 39, **caractérisé en ce qu'**il comporte des moyens automatiques d'asservissement de sa direction, par exemple commandés par un dispositif de commande et d'asservissement (24), ces moyens d'asservissement de direction étant aptes à automatiquement faire converger une trajectoire de déplacement de l'engin (2) vers et le long d'une ligne auxiliaire de guidage (38).

41. Engin (2) selon l'une des revendications 36 à 40, **caractérisé en ce qu'**il comporte des moyens de réglage de la position transversale de l'outil (4) autour d'une direction d'élévation, aptes à permettre la convergence limitée de la trajectoire de cet outil (4) vers et le long d'une ligne auxiliaire de guidage (38).

42. Engin (2) selon l'une des revendications 36 à 41, **caractérisé en ce qu'**il comporte une manette (45) de direction et des moyens de détermination de priorité d'un mode automatique, cette détermination permettant par un mouvement de cette manette (45) opérée par un chauffeur (3), de faire passer le fonctionnement d'un dispositif de commande et d'asservissement (24) d'un mode automatique vers un mode manuel.

**Patentansprüche**

1. Realisierungsverfahren einer Decke (7) beim Straßenbau mit einem vorbestimmten topographischen Profil aus einem vorhandenen, durch einen dreidimensionalen Mantel, wie zum Beispiel Erde oder Bauten, mittels eines auf einer Maschine (2) montierten Werkzeugs (4) begrenzten Körper (5), zum Beispiel für Erdarbeiten auf Baustellen oder dergleichen; wobei diese Maschine (2) mit einem globalen Positionierungssystem per Satellit vom Bifrequenz-, Differenzial-, Kinematik- und Realzeittyp, wie zum Beispiel GPS zusammenwirkt; wobei die Maschine (2) wenigstens einen globalen Positionierngsempfänger (10; 10A; 10B) zum Beispiel auf seinem Werkzeug (4) besitzt, um gemäß eines theoretischen Modells (6) der Decke (7) verschoben zu werden;
**dadurch gekennzeichnet, dass** es die Folgendes vorsehenden Stufen umfasst:

- Speichern von geeignet befestigten geometrischen Kurven (28, 30) an der Decke (7), davon wenigstens eine Leitkurve (28) deutliche in Längsrichtung und wenigstens ein Querprofil (29) ;

- Messen zu wenigstens an einem Zeitpunkt (N) der Position in Erhebung (z(P)), Längsrichtung (x(P)) und Querrichtung (y(P)) des Werkzeugs mithilfe des Empfängers (10; 10A; 10B) bei der Verschiebung des Werkzeugs, zum Beispiel gemäß einer vorbestimmten Frequenz (F) ;

- Zuordnung einer Stelle entlang der Leitkurve (28) zu dieser gemessenen Position;

- lokale Berechnung des Modells (6) durch Entsprechung eines Querprofil (29) der Decke (7) mit dieser Stelle;

- Aktivierung eines bedeutenden typischen Abstandes (ET) einer charakteristischen Unwägbarkeit des globalen Positionierungssystems im Speicher, eventuell nach seiner Bestimmung bei einer Eichungsphase des Empfängers (10; 10A; 10B) ;

- Abgleich einer gemessenen Erhebungsposition (z(P)) des Werkzeugs mit einer vom Modell (6) aus definierten theoretischen Höhe ($Z_{TH}$(P)) bei der Verschiebung des Werkzeugs (4), zum Beispiel gemäß der vorbestimmten Frequenz (F) ;

- Ermittlung eines Erhebungsabstandes (E(N)) zum Zeitpunkt (N) aus diesem Abgleich, so dass der Abstand als Nullabstand (E0) bezeichnet wird, wenn die gemessene Erhebungsposition (z(P)) deutlich mit der theoretischen Höhe ($Z_{TH}$(P)) zusammenfällt;

- Definition einerseits wenigstens zwei Analysebänder wenigstens aus dem Nullabstand (E0), und zum Beispiel zwei zentrale Bänder, jeweils ein oberes (31) und ein unteres (34), zwei mediane Bänder, jeweils ein oberes (32) und ein unteres (35), und zwei äußere Bänder, jeweils ein oberes (33) und ein unteres (36), wobei diese Bänder zum Beispiel paarig symmetrisch sind, wobei untere und / oder obere Begrenzungen dieser Analysebänder proportional zum typischen Abstand (ET) sind;

- Festlegung eines aktiven Analysebandes (31, 36), zu dem dieser Erhebungsabstand (E(N)) gehört;

- In Abhängigkeit des Abstandes (E(N)) und des aktiven Analysebandes, Berechnung eines Einstellwertes (C(P)) der Höhenregelung, dessen Wert in Abhängigkeit des festgelegten aktiven Analysebandes nach oben begrenzt ist; und

- Steuerung der Erhebungsposition des Werkzeugs (4) in Abhängigkeit vom berechneten Einstellwert (C(P)) derart, dass dieses Werkzeug entweder zeitweise in seiner Position gehalten wird oder auf begrenzte Weise an das Modell (6) auf eine deutlich zum absoluten Wert des Einstellwertes (C(P)) proportionale Erhebungsentfernung herangefahren wird.

**2.** Realisierungsverfahren gemäß Anspruch 1, **dadurch gekennzeichnet, dass** das theoretische Modell (6) der Decke (7) lokal insbesondere ausgehend von wenigstens folgenden Faktoren berechnet wird:

- der mathematisch definierten Leitkurve (28), insbesondere durch eine als Ebenenachse bezeichnete Linie, und durch ein Längsprofil, beide definiert durch wenigstens eine parametrierte, kontinuierliche und ableitbare Funktion, und mit wenigstens einem geometrischen Kurventeil (30), und zum Beispiel eine Folge derartiger Teile, wobei jeder mathematisch durch eine kontinuierliche Parameterfunktion, wie zum Beispiel einer geraden Linie, einem Kreisbogen, einer Parabel, einer Klothoiden oder dergleichen definiert wird; und

- einem mathematisch durch eine kontinuierliche parametrierte Funktion definierten Querprofil (29), zum Beispiel ist jedes Querprofil eine Folge von Segmenten gerader Linien mit einander anstoßenden Enden.

**3.** Realisierungsverfahren gemäß Anspruch 1 oder 2, **dadurch gekennzeichnet, dass** es zur Wiederherstellung einer vorhandenen Decke (7) bestimmt ist und bei der Speicherung der geometrischen Kurven (30) wenigstens eine insbesondere einen gemessenen Durchgang der vorhandenen Decke vorsehenden Phase hat, zum Beispiel mit einem dem zur Realisierung der Wiederherstellung vorgesehenen ähnlichen Motor (2).

**4.** Realisierungsverfahren gemäß Anspruch 1 bis 3, **dadurch gekennzeichnet, dass** eine laterale oder Richtungs-Kontrollstufe der Bahn in Längsrichtung des Motors (2) und / oder des Werkzeugs (4) bei der Realisierung der Decke (7) vorgesehen ist, wobei diese Stufe die Folgendes vorsehenden Phasen umfasst:

- Definition einer Führungshilfslinie (38), der die Maschine (2) bei einem bestimmten Durchgang der Realisierung zu folgen hat, wobei diese Führungslinie zum Beispiel in deutlich konstanter Entfernung zur Leitkurve (28) ist;

- Analyse der gemessenen lateralen Position in der Ebene des Werkzeugs (4) in Abhängigkeit von vom Empfänger (10, 10A, 10B) gelieferter Maße; und

- Berechnung einer zum Zusammenfallen einer Bahn mit der Führungshilfslinie (38) in einer Ebene der Maschine (2) geeignete lateralen Steuerregelung der Maschine (2) in Abhängigkeit durch diese Analyse erhaltener Parameter.

**5.** Realisierungsverfahren gemäß Anspruch 1 bis 4, **dadurch gekennzeichnet, dass** drei Analysebänder auf wenigstens einer Seite des Nullabstandes (E0) vorgesehen sind, und zwar:

- ein erstes, sogenanntes zentrales (31) und durch eine Abstandsanordnung definiertes Analyseband in der Nähe des Nullabstandes (E0) ;

- ein zweites, als medianes (32) bezeichnetes und durch die Abstände definiertes Analyseband, welche größer sind als die des zentralen Bandes; und

- ein drittes, weiter von Nullabstand (E0) entferntes als die zentralen und medianen Bänder, als äußeres (33) bezeichnetes und durch eine Abstandsanordnung definiertes Analyseband, welche größer sind als die des medianen Bandes;

eventuell, auf der anderen Seite des Nullabstandes (E0) andere, zum Beispiel symmetrische zu den zentralen, medianen und im Verhältnis zum Nullabstand (E0) äußere Analysebänder (34, 35, 36) vorgesehen sind.

6. Realisierungsverfahren gemäß Anspruch 1 bis 5, **dadurch gekennzeichnet, dass** die zum Beispiel im Verhältnis zum Nullabstand (E0) obere und untere Analysebänder, symmetrisch sind, und dass die Verarbeitung der Abstandsanordnungen lediglich ihren absoluten Wert berücksichtigt, wobei der Einstellwert (C(P)) einem Abstand (E(N)) eines negativen Vorzeichens dem Gegenteil des aus der Verarbeitung des absoluten Wertes dieses Abstandes hervorgegangenen Einstellwertes entspricht.

7. Realisierungsverfahren gemäß Anspruch 1 bis 6, **dadurch gekennzeichnet, dass** das theoretische Modell (6) geeignet ist, durch die Maschine (2) entlang der Leitkurve (28) und / oder entlang einer Führungshilfslinie (38) frei in der einen oder der anderen, zum Beispiel der entgegengesetzten, Richtungdurchlaufen zu werden.

8. Realisierungsverfahren gemäß Anspruch 7, **dadurch gekennzeichnet, dass** es eine automatische Erkennungsstufe der Vorlaufrichtung der Maschine (2) entlang der Leitkurve (28) und / oder der Führungshilfslinie (38) umfasst.

9. Realisierungsverfahren gemäß Anspruch 1 bis 8, **dadurch gekennzeichnet, dass** wenigsten zwei in Erhebung aufeinander folgende Durchgänge vorgesehen sind, wobei dann relativ zu einem Anfangsdurchgang eine Anfangs-Führungshilfslinie durch einen vorbestimmten Wert übertragen wird, um eine spätere Führungshilfslinie relativ zu einem darauffolgenden Durchgang zu definieren.

10. Realisierungsverfahren gemäß Anspruch 1 bis 9, **dadurch gekennzeichnet,:**

- **dass** man zum Zeitpunkt (N) die Positionen (x(P)), y(P), z(P)) des Werkzeugs an einem Punkt (P) der Decke (7) mithilfe des Empfängers (10; 10A; 10B) bei der Verschiebung des Werkzeugs gemäß einer vorbestimmten Frequenz (F) misst;

- **dass** man bei der Verschiebung des Werkzeugs (4) gemäß einer vorbestimmten Frequenz (F) die gemessene Erhebungsposition (z(P)) des Werkzeugs mit der theoretischen, vom Modell (6) aus definierten Höhe (zTH(P)) abgleicht;

- und **dass** die Messfrequenz (F), die Verarbeitung und die Berechnung, zwischen dem Zeitpunkt (N) und einem folgenden Zeitpunkt (N+1) einer späteren Messung durch eine Zeituhr des globalen Positionierungssystems definiert wird und zum Beispiel in der Größenordnung von 1 Hertz liegt.

11. Realisierungsverfahren gemäß Anspruch 5 bis 10, **dadurch gekennzeichnet, dass**, wenn der Abstand (E(N)) in einem äußeren Analyseband (33, 36) bestimmt wird, der Einstellwert zur Regelung (C(P)) der konstante Wert ist, zum Beispiel entspricht sein absoluter Wert einer Verschiebungsentfernung des Werkzeugs in der Größenordnung von 10 Millimetern.

12. Realisierungsverfahren gemäß Anspruch 5 bis 10, **dadurch gekennzeichnet, dass**, wenn der Abstand (E(N)) in einem medianen Analyseband (32, 35) bestimmt wird, eine sogenannte mediane Differenz oder durch eine Differenz zwischen diesem Abstand (E(N)) und einer jeweiligen, dem Nullabstand (E0) am nächsten liegende Begrenzung dieses Bandes (32, 35) definierten Differenz berechnet wird, wobei ein Einstellwert zur Regelung (C(P)) aus dieser Menge (D) abgeleitet wird.

13. Realisierungsverfahren gemäß Anspruch 12, **dadurch gekennzeichnet, dass**, wenn der absolute Wert der Menge (D) größer ist als ein maximaler medianer Aktionswert (C1), der absolute Wert des Einstellwertes (C(P)) als deutlich gleich diesem Wert (C1) bestimmt wird, zum Beispiel entspricht dieser Wert einer Verschiebungsentfernung des Werkzeugs (4) in der Größenordnung von 10 Millimetern.

14. Realisierungsverfahren gemäß Anspruch 12, **dadurch gekennzeichnet, dass**, wenn der absolute Wert der Menge (D) unter einem minimalen medianen Aktionswert (C2) liegt, der absolute Wert des Einstellwertes (C(P)) als deutlich gleich diesem Wert (C2) bestimmt wird, zum Beispiel entspricht dieser Wert einer Verschiebungsentfernung des Werkzeugs (4) in der Größenordnung von 4 Millimetern.

15. Realisierungsverfahren gemäß Anspruch 12, **da-**

**durch gekennzeichnet, dass**, wenn der absolute Wert der Menge (D) zwischen den maximalen (C1) und minimalen (C2) medianen (C(P)) als deutlich gleich dem absoluten Wert der Menge (D) bestimmt wird.

16. Realisierungsverfahren gemäß Anspruch 5 bis 10, **dadurch gekennzeichnet:**

    - **dass** man zum Zeitpunkt (N) die Positionen (x (P), y(P), z(P)) des Werkzeugs an einem Punkt (P) der Decke (7) mithilfe des Empfängers (10; 10A; 10B) bei der Verschiebung des Werkzeugs gemäß einer vorbestimmten Frequenz (F) misst;

    - **dass** man beim Verschieben des Werkzeugs (4) gemäß einer vorbestimmten Frequenz (F) die gemessene Erhebungsposition (z(P)) des Werkzeugs mit der ausgehend vom Modell (6) definierten theoretischen Höhe (zTH(P)) abgleicht ;

    - und **dass**, wenn der Abstand (E(N)) als innerhalb eines zentralen, zum Beispiel oberen oder unteren, Analysebandes (31, 34) bestimmt wird, eine Berechnungsstufe einer sogenannten zentralen Differenz (D') zwischen dem absoluten Wert dieses Abstandes und dem absoluten Wert eines Abstandes zu einem vorherigen Berechnungszeitpunkt (N-1) vor dem Zeitpunkt (N) gemäß des Wertes der Verarbeitungsfrequenz (F) durchgeführt.

17. Realisierungsverfahren gemäß Anspruch 16, **dadurch gekennzeichnet, dass**, wenn die Differenz (D') negativ oder Null ist, der Einstellwert (C(P) als deutlich Null ausgewählt wird, und zum Beispiel die Erhebungsentfernung der Annäherung des Werkzeugs (4) Null ist.

18. Realisierungsverfahren gemäß Anspruch 16, **dadurch gekennzeichnet, dass**, wenn die Differenz (D') positiv ist, eine sogenannte zentrale Menge (Q') gleich eines Bruchteils der Differenz (D'), zum Beispiel in der Größenordnung eines Drittels dieser Differenz, berechnet wird.

19. Herstellungsverfahren gemäß Anspruch 18, **dadurch gekennzeichnet, dass**, wenn die zentrale Menge (Q') größer ist als ein maximaler zentraler Wert (C3), der absolute Wert des Einstellwertes (C (P)) als deutlich gleich diesem Wert (C3) bestimmt wird, zum Beispiel entspricht dieser Wert einer Verschiebungsentfernung des Werkzeugs (4) in der Größenordnung von 4 Millimetern.

20. Herstellungsverfahren gemäß Anspruch 18, **da-**

**durch gekennzeichnet, dass**, wenn die zentrale Menge (Q') unter einem minimalen zentralen Aktionswert (C4) liegt, der absolute Wert des Einstellwertes (C(P)) als deutlich gleich diesem Wert (C4) bestimmt wird, zum Beispiel entspricht dieser Wert einer Verschiebungsentfernung des Werkzeugs (4) in der Größenordnung von 1 Millimeter.

21. Realisierungsverfahren gemäß Anspruch 18, **dadurch gekennzeichnet, dass**, wenn die zentrale Menge (Q') zwischen dem minimalen (C4) und dem maximalen (C3) zentralen Aktionswert inbegriffen ist, der absolute Wert des Einstellwertes (C(P)) als deutlich gleich dieser zentralen Menge (Q') bestimmt wird.

22. Realisierungsverfahren gemäß Anspruch 1 bis 21, **dadurch gekennzeichnet, dass** eine zum Beispiel rechte Regressionskurve (37) berechnet wird, die die durchschnittliche Entwicklung der im Verlauf eines vorbestimmten Zeitintervalls abgeleiteten Abstände definiert, zum Beispiel zwischen den Zeiten einer früheren Messung (N-50) und einer vorherigen Messung (N-1), wobei ein Regressionsabstand (E'(N)) zum Zeitpunkt (N) ausgehend von dieser Regressionskurve (37) extrapoliert wird, und wobei der Einstellwert (C(P)) dem dann in Abhängigkeit der Differenz zwischen dem extrapolierten Abstand (E'(N)) und dem Abstand (E(N) korrigierten Abstand (E(N)) entspricht.

23. Realisierungsverfahren gemäß Anspruch 22, **dadurch gekennzeichnet, dass** die auf den Einstellwert (C(P)) angewendete Korrektur bei der Berechnung dieses Einstellwertes den Ersatz einerseits des Wertes des Abstandes (E(N)) durch den Wert eines korrigierten Abstandes (E''(N)) vorsieht und andererseits den Wert des vorherigen Abstandes (E(N-1)) durch den Wert eines vorherigen korrigierten Abstandes (E'''(N-1)), wobei die Werte des korrigierten Abstandes (E'''(N)) und des korrigierten vorherigen Abstandes (E''(N-1)) jeweils gleich einem gewichteten Durchschnitt des Wertes des Abstandes (E(N)) und dem extrapolierten entsprechenden Abstand (E'(N)) sowie einem gewichteten Durchschnitt des Wertes des vorherigen Abstandes (E(N-1)) und einem entsprechenden extrapolierten vorherigen Abstand (E'(N-1)) sind.

24. Realisierungsverfahren gemäß Anspruch 1 bis 23, **dadurch gekennzeichnet, dass** die von den Empfängern (10, 10A, 10B) für die Verarbeitung empfangenen Signale oder Teilbilder Decodierungs- und Filterungsoperationen erfahren, wobei diese Operationen die Umwandlung der Teilbilder in zur Verarbeitung geeignete digitale Signale sowie die Ausschaltung jeglicher Maße erlauben, deren Abstand im Verhältnis zu einem vorherigen Maß über einem vorbestimmten hohen Wert liegt, zum Beispiel in der Größenordnung von 100 mm.

25. Verfahren gemäß Anspruch 1 bis 24, **dadurch gekennzeichnet, dass** eine durch ein Digitalisierungsmodul (19) vorgesehene Digitalisierungsstufe insbesondere folgende Phasen umfasst:

- Digitalisierung der Daten bezüglich des zum Beispiel aus einem computergestützten Konzept hervorgegangenen theoretischen Modells (6) ;

- Simulation der Verschiebung der Maschine (2) auf dem Modell (6) zur Überprüfung der Kohärenz der Daten;

- Anzeigen der Parameter des theoretischen Modells (6); und

- Erstellung von zur Verarbeitung durch einen Rechner (18) zur Steuerung des Verfahrens geeigneter Computerdateien.

26. Realisierungsverfahren gemäß Anspruch 1 bis 25, **dadurch gekennzeichnet, dass** das theoretische Modell (6) insbesondere durch die Leitkurve (28) und wenigstens ein Querprofil definiert wird, wobei eine Berechnungsstufe (18) durch lineare Interpolation zwischen den verschiedenen Profilparametern quer zum theoretischen Modell (6) entlang dieser Leitkurve (28) vorgesehen ist.

27. Realisierungsverfahren gemäß Anspruch 1 bis 26, **dadurch gekennzeichnet, dass** eine automatische Identifizierungsstufe von Fehlern in der begrenzten Konvergenz und / oder der Verarbeitung derartig vorgesehen ist, wie zum Beispiel das Fehlen von Messpositionen durch den Empfänger (10, 10A, 10B), eine Störung der Kommunikation, ein Fehler bei der Digitalisierung des theoretischen Modells (6), ein Übertragungsfehler der globalen Positionierungsinformation zu einem Rechner (18), ein Berechnungsfehler bei der Einstellung oder ein der Maschine (2) inhärenter Positionierungsfehler.

28. Realisierungsverfahren gemäß Anspruch 1 bis 27, **dadurch gekennzeichnet, dass** es den Einsatz wenigstens eines zweiten Empfängers (10; 10A; 10b) und / oder wenigstens eines Haltungssensors, zum Beispiel einen Neigungsmesser oder Gefällesensor vorsieht.

29. Realisierungsverfahren gemäß Anspruch 1 bis 28, **dadurch gekennzeichnet, dass** es drei unterschiedliche Funktionsmodi vorsieht, einen sogenannten Prioritätsmodus an der linken Seite des Werkzeugs (4) und einen sogenannten Prioritätsmodus an der rechten Seite des Werkzeugs (4), und einen Modus ohne Priorität, insbesondere für die Realisierung von durchbrochenen Querprofilen (29) oder dergleichen der Decke (7).

30. Zur Realisierung gemäß eines theoretischen Modells (6) bestimmte Steuer- und Regelungsvorrichtung (24) einer Decke (7) beim Straßenbau mit einem vorbestimmten topographischen Profil aus einem, durch einen dreidimensionalen Mantel, wie zum Beispiel Erde oder Bauten, begrenzten Körper (5), mittels eines auf einer Maschine (2) montierten Werkzeugs (4) ; wobei diese Maschine (2) mit einem globalen Positionierungssystem per Satellit zusammenwirkt, wobei die besagte Vorrichtung (24) **dadurch gekennzeichnet, ist, dass** sie insbesondere wenigstens Folgendes umfasst:

- ein Positionierungsmodul (17) mit wenigstens einem globalen, zur Messung wenigstens der Position $(x(P), y(P), z(P))$ des Werkzeugs (4) zu einem Zeitpunkt (N) bestimmten Positionierungsempfänger (10) ;

- ein zur Speicherung der geeignet an der Decke 7 befestigten geometrischen Kurven (28, 30) und zur Zuordnung der gemessenen Position $(x(P), y(P), z(P))$ des Werkzeugs (4) zu einer Stelle entlang der Leitkurve (28) geeignetes Digitalisierungsmodul (19) ;

- ein zur Verarbeitung der einerseits aus dem Positionierungsmodul (17) und andererseits nur aus einem nützlichen Teil des theoretischen Moduls (6) stammenden Informationen geeigneter Rechner (18), der zum Beispiel mittels einer durch das Digitalisierungsmodul (19) erstellten Datei zugänglich ist, um eine gemessene Erhebungsposition $(z(P))$ des Werkzeugs mit einer ausgehend vom Modell (6).definierten theoretischen Höhe $(Z_{TH}(P))$ abgleichen zu können, einen Erhebungsabstand $(E(N))$ zum Zeitpunkt (N) abzuleiten, wobei dieser Abstand als Nullabstand (E0) bezeichnet wird, wenn die gemessene Erhebungsposition $(z(P))$ deutlich mit der theoretischen Höhe $(Z_{TH}(P))$ zusammenfällt, einerseits wenigstens den Nullabstand (E0) definieren, wenigstens zwei Analysebänder, ein aktives Analyseband definieren, zu dem der Erhebungsabstand $(E(N))$ gehört, und in Abhängigkeit des Abstandes $(E(N))$ und des aktiven Analysebandes einen Einstellwert $(C(P))$ zur Regelung der Erhebung berechnen;

- ein zum Beispiel programmierbarer Automat (20), der durch den Rechner (18) gesteuert werden kann; und

- jeweils rechte und linke und die Richtung (23) des Werkzeugs weisende Erhebungsverteiler (21, 22), die durch den Automat (20) gesteuert werden können und dazu bestimmt sind, auf die Erhebungsposition des Werkzeugs (4) in Abhängigkeit von dem Einstellwert (C(P)) der Regelung einzuwirken.

31. Vorrichtung (24) gemäß Anspruch 30, **dadurch gekennzeichnet, dass** der Rechner (18) insbesondere wenigstens drei Unteraufbauten umfasst, und zwar:

   - einen Dekodierungs- und Filterungskern (25);

   - einen Lokalisierungskern (26); und

   - an die Erhebungsverteiler (21, 22) und die richtungsweisenden Verteiler (23) des Werkzeugs (4) mittels des Automaten (20) angeschlossene Einstellmittel (27).

32. Vorrichtung (24) gemäß Anspruch 31, **dadurch gekennzeichnet, dass** ein Dekodierungs- und Filterungskern (25) sowie ein Lokalisierungskern (26) Computerprogramme zur digitalen Berechnung der aus den digitalen oder analogen Berechnungsprogrammen hervorgegangenen Anwendungen beinhalten.

33. Vorrichtung (24) gemäß Anspruch 30 bis 32, **dadurch gekennzeichnet, dass** sie Übertragungsmittel zum Rechner (18) zu jedem Zeitpunkt (N) von Informationen in Form von kodierten Nachrichten beinhaltet, insbesondere bezüglich einer Position in Längsrichtung (x), Querrichtung (y) und Erhebung (z) jedes mobilen Empfängers (10, 10A, 10B) beinhaltet.

34. Vorrichtung (24) gemäß Anspruch 30 bis 33, **dadurch gekennzeichnet, dass** sie Sicherheitsmittel umfasst, die geeignet sind, einen Betriebsstillstand der mobilen Empfänger (10, 10A, 10B) festzustellen und / oder geeignet sind, diese Vorrichtung (24) von einem automatischen Betriebsmodus in einen manuellen Betriebsmodus umzuschalten, in dem der Fahrer (3) der Maschine (2) letztere vollständig kontrolliert.

35. Vorrichtung (24) gemäß Anspruch 30 bis 34, **dadurch gekennzeichnet, dass** sie automatische Erkennungsmittel der Vorlaufrichtung der Maschine (2) entlang der Leitkurve (28) und / oder eine Führungshilfslinie (38) des theoretischen Modells (6) umfasst.

36. Zur Umsetzung des Verfahrens gemäß Anspruch 1 bis 29 geeignete Maschine, mit wenigstens einer Vorrichtung (24) gemäß Anspruch 30 bis 35, wie zum Beispiel Planierbaggerlöffel, Greiferkübel für den Erdaushub, kontinuierliche Betongießmaschine, Knabberschere für vorhandene Strukturen, Schneepflug oder dergleichen, wobei die besagte Maschine (2) zum Zusammenwirken mit einem globalen Positionierungssystem per Satellit geeignet ist, **dadurch gekennzeichnet, dass** sie wenigstens ein Werkzeug (4) mit wenigstens einem globalen Positionierungsempfänger (10; 10A, 10B) beinhaltet, zum Beispiel zwei auf jeweilige Masten (8; 8A; 8b) in der Nähe der transversalen Enden des Werkzeugs (4) montierte Empfänger.

37. Maschine (2) gemäß Anspruch 36, **dadurch gekennzeichnet, dass** sie wenigstens ein Werkzeug (4) mit wenigsten einem globalen Positionierungsempfänger (10; 10A; 10B) zum Beispiel in der Nähe der transversalen Enden des Werkzeugs (4) und wenigstens einen Haltungssensor umfasst.

38. Maschine (2) gemäß Anspruch 36 oder 37, **dadurch gekennzeichnet, dass** sie zum Beispiel in einer Fahrzeugkabine (46) mit Anzeigemitteln (47, 48, 49), wie zum Beispiel wenigstens einem Bildschirm, zum Beispiel mit Flüssigkristallen oder dergleichen ausgerüstet ist, wobei die besagte Fahrzeugkabine (46) zur Aufnahme eines Fahrers der besagten Maschine (2) geeignet ist.

39. Maschine (2), gemäß Anspruch 38, **dadurch gekennzeichnet, dass** die Anzeigemittel wenigstens eine Start- und Parametrieransicht (47), eine Arbeitsansicht (48) und eine Ansicht geometrischer Informationen (49) beinhaltet, wobei die Start- und Parametrieransicht (47) zum Beispiel berührungssensitiv sind, um einem Fahrer (3) des Fahrzeugs die Initialisierung einer Steuer- und Regelungsvorrichtung (24) zu erlauben.

40. Maschine (2) gemäß Anspruch 36 bis 39, **dadurch gekennzeichnet, dass** sie automatische Regelungsmittel ihrer Richtung umfasst, die zum Beispiel durch eine Steuer- und Regelungsvorrichtung (24) gesteuert werden, wobei diese Regelungsmittel der Richtung geeignet sind, die Verschiebungsbahn der Maschine (2) zur und entlang einer Führungshilfslinie (38) konvergieren zu lassen.

41. Maschine (2) gemäß Anspruch 36 bis 40, **dadurch gekennzeichnet, dass** es Regelungsmittel der Position in Querrichtung des Werkzeugs (4) um eine Erhebungsrichtung beinhaltet, die geeignet sind, die begrenzte Konvergenz der Bahn dieses Werkzeugs (4) zu und entlang einer Führungshilfslinie (38) zuzulassen.

42. Maschine (2) gemäß Anspruch 36 bis 41, **dadurch**

**gekennzeichnet dass** sie einen Richtungshebel (45) und Mittel zur Bestimmung der Priorität eines automatischen Modus beinhaltet, wobei diese Bestimmung durch eine Bewegung dieses von einem Fahrer (3) bedienten Hebels (45) den Übergang vom Betrieb einer Steuer- und Regelungsvorrichtung (24) von einem automatischen Modus in einen manuellen Modus erlaubt.

**Claims**

1. A method of producing a road project surface (7) having a predetermined topographical profile, from an existing body (5) delimited by a three-dimensional envelope, such as a site or building, using a tool (4) mounted on a machine (2), for example an earthwork machine for a construction site or the like; this machine (2) cooperating with a global satellite positioning system of the bifrequency, differential, kinematic and real time type such as GPS; the machine (2) having at least one global positioning receiver (10; 10A; 10B), for example on its tool (4), in order to be moved according to a theoretical model (6) of the surface (7) ;
   **characterised in that** it includes the steps making provision for:

   - storing fixed geometric curves (28, 30) peculiar to the surface, including at least one substantially longitudinal arch axis (28) and at least one cross-sectional profile (29) ;

   - measuring, at least one moment (N), the elevation (z(P)), longitudinal (x(P)) and transverse (y(P)) position of the tool, using a receiver (10; 10A; 10B) when the tool is moved, for example at a predetermined frequency (F) ;

   - associating a position along the arch axis (28) with this measured position;

   - locally calculating the theoretical model (6) whilst making a cross-sectional profile (29) of the surface (7) correspond to this location;

   - activating in memory a standard deviation (ET) signifying an uncertainty characteristic of the global positioning system, possibly after it is determined during a phase of calibrating the receiver (10; 10A; 10B) ;

   - comparing, during the movement of the tool (4), for example at the predetermined frequency (F), a measured elevation position (z(P)) of the tool with a theoretical altitude ($z_{TH}(P)$) defined from the model (6) ;

   - deducing from this comparison a deviation (E(N)) in elevation at' the time of measurement (N), such that this deviation is said to be a zero deviation (E0) when the measured elevation position (z(P)) is substantially the same as the theoretical altitude ($z_{TH}(P)$) ;

   - defining on the one hand at least from the zero deviation (E0) at least two analysis bands, for example two centre bands respectively upper (31) and lower (34), two median bands respectively upper (32) and lower (35), and two external bands respectively upper (33) and lower (36), these bands being for example symmetrical in pairs, lower and/or upper delimiters of these analysis bands being proportional to the standard deviation (ET);

   - identifying an active analysis band (31, 36) to which this deviation in elevation (E(N)) belongs;

   - calculating, according to the deviation (E(N)) and the active analysis band, an elevation slaving reference (C(P)), a ceiling for whose value is set according to the active analysis band identified; and

   - controlling the elevation position of the tool (4) according to the calculated reference (C(P)), so that this tool is either momentarily left in position, or brought closer, in a limited manner, to the model (6) by an elevation distance substantially proportional to the absolute value of the reference (C(P)).

2. A production method according to Claim 1, **characterised in that** the theoretical model (6) of the surface (7) is calculated locally from notably at least:

   - the arch axis (28), defined mathematically, notably by a line known as the axis in the horizontal plane and by a longitudinal profile, defined themselves by at least one continuous and derivable parameterised function, and including at least part of a geometric curve (30), and for example a succession of such parts, each being defined mathematically by a continuous parameterised function, such as a straight line, arc of a circle, parabola, clothoid or the like; and

   - a cross-sectional profile (29), defined mathematically by a continuous parameterised function, for example each cross-sectional profile is a succession of end to end straight line segments.

3. A production method according to one of Claims 1 or 2, **characterised in that** it is intended for re-establishing an existing surface (7), and including, at the time of storage of the geometric curves (30), at least one phase making provision notably for a measuring pass over the existing surface, for example with a machine (2) similar to the one provided for effecting the re-establishment.

4. A production method according to one of Claims 1 to 3, **characterised in that** a step of lateral or directional control of the longitudinal path of the machine (2) and/or of the tool (4) is provided during the production of the surface (7), this step including the phases making provision for:

   - defining an auxiliary guidance line (38) which must be followed by the machine (2) during a given pass of the production, this guidance line being for example at a substantially constant distance from the arch axis (28) ;

   - analysing the measured lateral position in the horizontal plane of the tool (4) according to measurements supplied by the receiver (10; 10A; 10B) ; and

   - according to the parameters obtained by this analysis, calculating a lateral slaving control of the machine (2) able to make a trajectory of the machine (2) in the horizontal plane coincide with the auxiliary guidance line (38).

5. A production method according to one of Claims 1 to 4, **characterised in that**, from at least part of the zero deviation (E0), three analysis bands are provided, namely:

   - a first analysis band close to the zero deviation (E0), said to be centre (31) and defined by a set of deviations;

   - a second analysis band, said to be median (32) and defined by deviations greater than those of the centre band; and

   - a third analysis band, further away from the zero deviation (E0) than the centre and median bands, said to be external (33) and defined by a set of deviations greater than those of the median band;

   possibly from another part of the zero deviation (E0), other analysis bands (34, 35, 36) being provided, for example symmetrical with the centre, median and external bands with respect to the zero deviation (E0).

6. A production method according to one of Claims 1 to 5, **characterised in that**, the analysis bands are symmetrical, for example greater or lesser with respect to the zero deviation (E0), and **in that** the processing of all the deviations considers only their absolute value, the reference (C(P)) corresponding to a deviation (E(N)) of negative sign being equal to the opposite of the reference issuing from the processing of the absolute value of this deviation.

7. A production method according to one of Claims 1 to 6, **characterised in that** the theoretical model (6) is able to have the machine (2) run through it along the arch axis (28) and/or along an auxiliary guidance line (38), freely in one direction or another, for example the opposite direction.

8. A production method according to Claim 7, **characterised in that** it includes a step of automatic recognition of the direction of movement of the machine (2) along the arch axis (28) and/or the auxiliary guidance line (38).

9. A production method according to one of Claims 1 to 8, **characterised in that** at least two successive passes are provided, in elevation, an initial auxiliary guidance line, relating to an initial pass, then being translated by predetermined value in order to define a subsequent auxiliary guidance line, relating to a following pass.

10. A production method according to one of Claims 1 to 9, **characterised:**

    - **in that**, at the instant (N), a measurement is made of the positions (x(P)), y(P), z(P)) of the tool at a point (P) on the surface (7), using the receiver (10; 10A; 10B) during the movement of the tool at a predetermined frequency (F);

    - **in that**, during the movement of the tool (4), at a predetermined frequency (F), the measured elevation position (z(P)) of the tool is compared with the theoretical altitude ($z_{TH}(P)$) defined from the model (6) ;

    - and **in that** the frequency (F) of measurement, processing and calculation is defined, between the instant (N) and a following instant (N+1) of subsequent measurement, by a a clock in the global positioning system, and is for example around 1 hertz.

11. A production method according to one of Claims 5 to 10, **characterised in that**, if the deviation (E(N)) is determined in an external analysis band (33, 36), then the slaving reference (C(P)) is of constant value, for example its absolute value corresponds to a tool movement distance of around 10 millimetres.

**12.** A production method according to one of Claims 5 to 10, **characterised in that**, if the deviation (E(N)) is determined in a median analysis band (32, 35), then a so-called median difference or quantity (D) is calculated, defined by a difference between this deviation (E(N)) and a respective delimiter of this band (32, 35) closest to the zero deviation (E0), a slaving reference (C(P)) being derived from this quantity (D).

**13.** A production method according to Claim 12, **characterised in that**, if the absolute value of the quantity (D) is greater than a maximum median action value (C1), then the absolute value of the reference (C(P)) is determined as being substantially equal to this value (C1), for example this value corresponds to a movement distance of the tool (4) of around 10 millimetres.

**14.** A production method according to Claim 12, **characterised in that**, if the absolute value of the quantity (D) is less than a minimum median action value (C2), then the absolute value of the reference (C(P)) is determined as being substantially equal to this value (C2), for example this value corresponds to a movement distance of the tool (4) of around 4 millimetres.

**15.** A production method according to Claim 12, **characterised in that**, if the absolute value of the quantity (D) is between maximum (C1) and minimum (C2) median values, then the absolute value of the reference (C(P)) is determined as being substantially equal to the absolute value of the quantity (D).

**16.** A production method according to one of Claims 5 to 10, **characterised:**

- **in that**, at the instant (N), a measurement is made of the positions (x(P)), y(P), z(P)) of the tool at a point (P) on the surface (7), using the receiver (10; 10A; 10B) during the movement of the tool at a predetermined frequency (F);

- **in that**, during the movement of the tool (4), at a predetermined frequency (F), the measured elevation position (z(P)) of the tool is compared with the theoretical altitude ($z_{TH}$(P)) defined from the model (6) ;

- and **in that**, if the deviation (E(N)) is determined as being in a centre analysis band (31, 34), for example upper or lower, then there is performed a step of calculating a so-called centre difference (D') between the absolute value of this deviation and the absolute value of a deviation at a previous instant (N-1) of calculation before the instant (N) according to the value of the processing frequency (F).

**17.** A production method according to Claim 16, **characterised in that**, if the difference (D') is negative or zero, then the reference (C(P)) is chosen so as to be substantially zero, and for example the elevation distance of bringing the tool (4) closer is zero.

**18.** A production method according to Claim 16, **characterised in that**, if the difference (D') is positive, then there is calculated a so-called centre quantity (Q'), equal to a fraction of the difference (D'), for example around one third of this difference.

**19.** A production method according to Claim 18, **characterised in that**, if the centre quantity (Q') is greater than a maximum centre value (C3), then the absolute value of the reference (C(P)) is determined as being substantially equal to this value (C3), for example this value corresponds to a movement distance of the tool (4) of around 4 millimetres.

**20.** A production method according to Claim 18, **characterised in that**, if the centre quantity (Q') is less than a minimum centre action value (C4), then the absolute value of the reference (C(P)) is determined as being substantially equal to this value (C4), for example this value corresponds to a movement distance of the tool (4) of around 1 millimetre.

**21.** A production method according to Claim 18, **characterised in that**, if the centre quantity (Q') is between the minimum (C4) and maximum (C3) centre action values, then the absolute value of the reference (C(P)) is determined as being substantially equal to this centre quantity (Q').

**22.** A production method according to one of Claims 1 to 21, **characterised in that** a regression curve (37), for example right-hand, is calculated, which defines the mean change in the deviations derived during a predetermined interval of time, for example between times of a prior measurement (N-50) and a preceding measurement (N-1), a regression deviation (E'(N)) being extrapolated at instant (N) from this regression curve (37), and the reference (C(P)) corresponding to the deviation (E(N)) then being corrected as a function of the difference between the extrapolated deviation (E'(N)) and the deviation (E(N)).

**23.** A production method according to Claim 22, **characterised in that** the correction applied to the reference (C(P)) makes provision for replacing, in the calculation of this reference, on the one hand the value of the deviation (E(N)) with the value of a corrected deviation (E''(N)), and on the other hand the value of the previous deviation (E(N-1)) with the value of a preceding corrected deviation (E"(N-1)), the values of the corrected deviation (E"(N)) and the preceding corrected deviation (E"(N-1)) being equal respectively to a weighted mean of the value of the deviation (E(N)) and of the corresponding extrapolated deviation (E'(N)), and to a weighted mean of the value of the preceding deviation (E(N-1)) and a corresponding preceding extrapolated deviation (E'(N-1)).

24. A production method according to one of Claims 1 to 23, **characterised in that** signals or frames received from the receivers (10, 10A, 10B) for processing, undergo decoding and filtering operations, these operations making it possible to transform the frames into digital signals able to be processed, and to eliminate all the measurements whose deviation with respect to a preceding measurement is greater than a predetermined high value, for example around 100 mm.

25. A method according to one of Claims 1 to 24, **characterised in that** a digitisation step, provided by a digitisation module (19), includes notably the phases of:

    - digitising data relating to the theoretical model (6) for example issuing from a computer aided design;

    - simulating the movement of the machine (2) on the theoretical model (6), in order to check the consistency of the data;

    - display of parameters of the theoretical model (6); and

    - creating computer files able to be processed by a computer (18) controlling the method.

26. A production method according to one of Claims 1 to 25, **characterised in that** the theoretical model (6) is notably defined by the arch axis (28) and at least one cross-sectional profile, a step being provided for calculating (18) by linear interpolation between different cross-sectional profile parameters of the theoretical model (6), along this arch axis (28).

27. A production method according to one of Claims 1 to 26, **characterised in that** there is provided an automatic step of identification of error in the limited convergence and/or the processing, such as at least an absence of position measurement by the receiver (10, 10A, 10B), a failure in communication, an error in digitisation of the theoretical model (6), an error in transmitting the global positioning information to a computer (18), a slaving calculation error, or a positioning error peculiar to the machine (2).

28. A production method according to one of Claims 1 to 27, **characterised in that** it provides for the use of at least a second receiver (10; 10A; 10B) and/or at least one attitude sensor, for example an inclinometer or a camber sensor.

29. A production method according to one of Claims 1 to 28, **characterised in that** it provides for three distinct operating modes, a so-called mode of priority to the left of the tool (4), a so-called mode of priority to the right of the tool (4), and a mode without priority, notably for producing cross-sectional profiles (29), broken or the like, of the surface (7).

30. A control and slaving device (24) intended for the production, according to a theoretical model (6), of a road project surface (7) having a predetermined topographical profile, from a body (5) delimited by a three-dimensional envelope such as a site or building, using a tool (4) mounted on a machine (2) co-operating with a global satellite positioning system, the said device (24) being **characterised in that** it comprises in particular at least:

    - a positioning module (17) comprising at least one global postioning receiver (10) intended to measure at least at an instant (N) the position (x(P), y(P), z(P)), of the tool (4) ;

    - a digitisation module (19) able to store fixed geometric curves (28, 30) peculiar to the surface and to associate with the measured position (x(P), y(P), z(P)) of the tool (4) a location along the director curve (28) ;
      a computer (18) able to process information coming on the one hand from the positioning module (17) and on the other hand from a useful part only of the theoretical model (6), accessible for example by means of a file created by the digitisation module (19), in order to be able to compare a measured elevation position (z(P)) of the tool with a theoretical altitude ($z_{TH}$(P)) defined from the model (6), to deduce a difference (E(n)) in elevation at the instant (N), this difference being said to be a zero difference (E0) when the measured elevation position (z(P)) is substantially merged with the theoretical altitude ($z_{TH}$(P)), to define on the one hand, at least from the zero difference (E0), at least two analysis bands, to identify an active analysis band to which the elevation difference (E(N)) belongs, and to calculate, according to the difference (E(N)) and the active analysis band, a slaving set elevation value (C(P)) ;

- an automatic controller (20), for example programmable, able to be controlled by the computer (18); and

- elevation distributors (21, 22), respectively right, left and tool direction (23), able to be controlled by the automatic controller (20) and intended to act on the elevation position of the tool (4) according to the slaving set value (C(P)).

31. A device (24) according to Claim 30, **characterised in that** the computer (18) comprises notably at least three subsystems, namely:

- a decoding and filtering kernel (25);

- a location kernel (26); and

- slaving means (27) connected to the elevation (21, 22) and direction (23) control valves of the tool (4) by means of the automatic controller (20).

32. A device (24) according to Claim 31, **characterised in that** a decoding and filtering kernel (25) and a location kernel (26) contain digital calculation computer programs, applications issuing from digital calculation software or the like.

33. A device (24) according to one of Claims 30 to 32, **characterised in that** it comprises means of transmitting to the computer (18) at each instant (N) information in the form of coded messages, notably relating to a longitudinal (x) transverse (y) and elevation (z) position of each mobile receiver (10, 10A, 10B).

34. A device (24) according to one of Claims 30 to 33, **characterised in that** it has safety means, able to detect or identify a stoppage of functioning of the mobile receivers (10, 10A, 10B) and/or able to cause this device (24) to switch from an automatic functioning mode to a manual functioning mode according to which a driver (3) of the machine (2) fully controls the latter.

35. A device (24) according to one of Claims 30 to 34, **characterised in that** it comprises means for the automatic recognition of the direction of travel of the machine (2) along the arch axis (28) and/or an auxiliary guidance line (38) of the theoretical model (6).

36. A machine (2) able to implement the method according to one of Claims 1 to 29 and having at least one device (24) according to one of Claims 30 to 35, such as an earthworks grader, a filler tipping skip, a continuous concrete pouring machine, a nibbler for an existing structure, a snow plough or the like, the said machine (2) being able to co-operate with a global satellite positioning system, **characterised in that** it has at least one tool (4) with at least one global positioning receiver (10; 10A; 10B), for example two receivers, mounted on respective masts (8; 8A; 8B) close to the transverse ends of the tool (4).

37. A machine (2) according to Claim 36, **characterised in that** it has at least one tool (4) and at least one global positioning receiver (10; 10A; 10B) for example close to the transverse ends of the tool (4) and at least one attitude sensor.

38. A machine (2) according to Claim 36 or 37, **characterised in that** there is provided, for example in a cab (46), display means (47, 48, 49) such as at least one screen, for example of the liquid crystal or similar type, the said cab (46) being able to receive a driver of the said machine (2).

39. A machine (2) according to Claim 38, **characterised in that** the display means include at least one welcoming and parameterising screen (47), a working screen (48) and a geometric information screen (49), the welcoming and parameterising screen (47) being for example of the touch type to enable a driver (3) of the vehicle to initialise a control and slaving device (24).

40. A machine (2) according to one of Claims 36 to 39, **characterised in that** it has automatic means for the slaving of its direction, for example controlled by a control and slaving device (24), these direction slaving means being able to automatically make a movement path of the machine (2) converge towards and along an auxiliary guidance line (38).

41. A machine (2) according to one of Claims 36 to 40, **characterised in that** it has means of adjusting the transverse position of the tool (4) about an elevation direction, able to allow the limited convergence of the path of this tool (4) towards and along an auxiliary guidance line (38).

42. A machine (2) according to one of Claims 36 to 41, **characterised in that** it has a steering lever (45) and means of determining the priority of an automatic mode, this determination making it possible, by a movement of this lever (45) operated by a driver (3), to make the functioning of a control and slaving device (24) change from an automatic mode to a manual mode.

FIG.1

FIG.2

FIG.3

FIG.4

FIG.5

FIG.6

FIG.7

FIG.8

FIG. 9

FIG.10